(19) Europäisches Patentamt
European Patent Office
Office européen des brevets

(11) EP 4 681 804 A1

(12) EUROPEAN PATENT APPLICATION
published in accordance with Art. 153(4) EPC

(43) Date of publication:
21.01.2026 Bulletin 2026/04

(21) Application number: 24770997.5

(22) Date of filing: 15.03.2024

(51) International Patent Classification (IPC):
*B01D 61/14* (2006.01) *B01D 29/50* (2006.01)
*B01D 39/16* (2006.01) *B01D 61/16* (2006.01)
*B01D 63/02* (2006.01) *B01D 69/00* (2006.01)
*B01D 69/08* (2006.01) *B01D 69/12* (2006.01)
*B01D 71/44* (2006.01) *B01D 71/68* (2006.01)

(52) Cooperative Patent Classification (CPC):
B01D 29/50; B01D 39/16; B01D 61/14; B01D 61/16; B01D 63/02; B01D 69/00; B01D 69/08; B01D 69/12; B01D 71/44; B01D 71/68

(86) International application number:
PCT/JP2024/010177

(87) International publication number:
WO 2024/190895 (19.09.2024 Gazette 2024/38)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 15.03.2023 JP 2023040336
28.09.2023 JP 2023166732

(71) Applicant: TORAY INDUSTRIES, INC.
Tokyo 103-8666 (JP)

(72) Inventors:
- KARIYA Yoshihiro
Otsu-shi, Shiga 520-8558 (JP)
- KOYAMATSU Yuichi
Otsu-shi, Shiga 520-8558 (JP)
- HAYASHI Akihiro
Otsu-shi, Shiga 520-8558 (JP)

(74) Representative: Kador & Partner Part mbB
Corneliusstraße 15
80469 München (DE)

# (54) FILTER UNIT, PURIFICATION DEVICE, AND METHOD FOR PRODUCING PURIFIED LIQUID

(57) The present invention provides a filter unit, a purification apparatus, a purified liquid, and a method of producing purified liquid, wherein a filter is arranged that is suitable for the efficient purification of a solution containing a biological substance, specifically a biopharmaceutical (such as antibody drugs, gene therapy drugs, nucleic acid drugs, virus vectors, etc.), a food ingredient or a beverage ingredient, and particularly a viral vector. The filter unit of the present invention comprises a separation functional layer "a" section having an average pore diameter $D_a$, a separation functional layer "b" section having an average pore diameter $D_b$, and a separation functional layer "c" section having an average pore diameter $D_c$, and an inlet for introducing a liquid to be treated into the separation functional layer "a" section, wherein the average pore diameters $D_a$, $D_b$, and $D_c$ satisfy the following conditions A and B, and the separation functional layers are arranged in the order of the "a" section, the "b" section, and the "c" section from the inlet.

$$\text{Condition A: } 30\ \mu m \geq D_a > D_b > D_c \geq 0.01\ \mu m$$

$$\text{Condition B: } 6 \geq D_a/D_b \geq 2.8$$

EP 4 681 804 A1

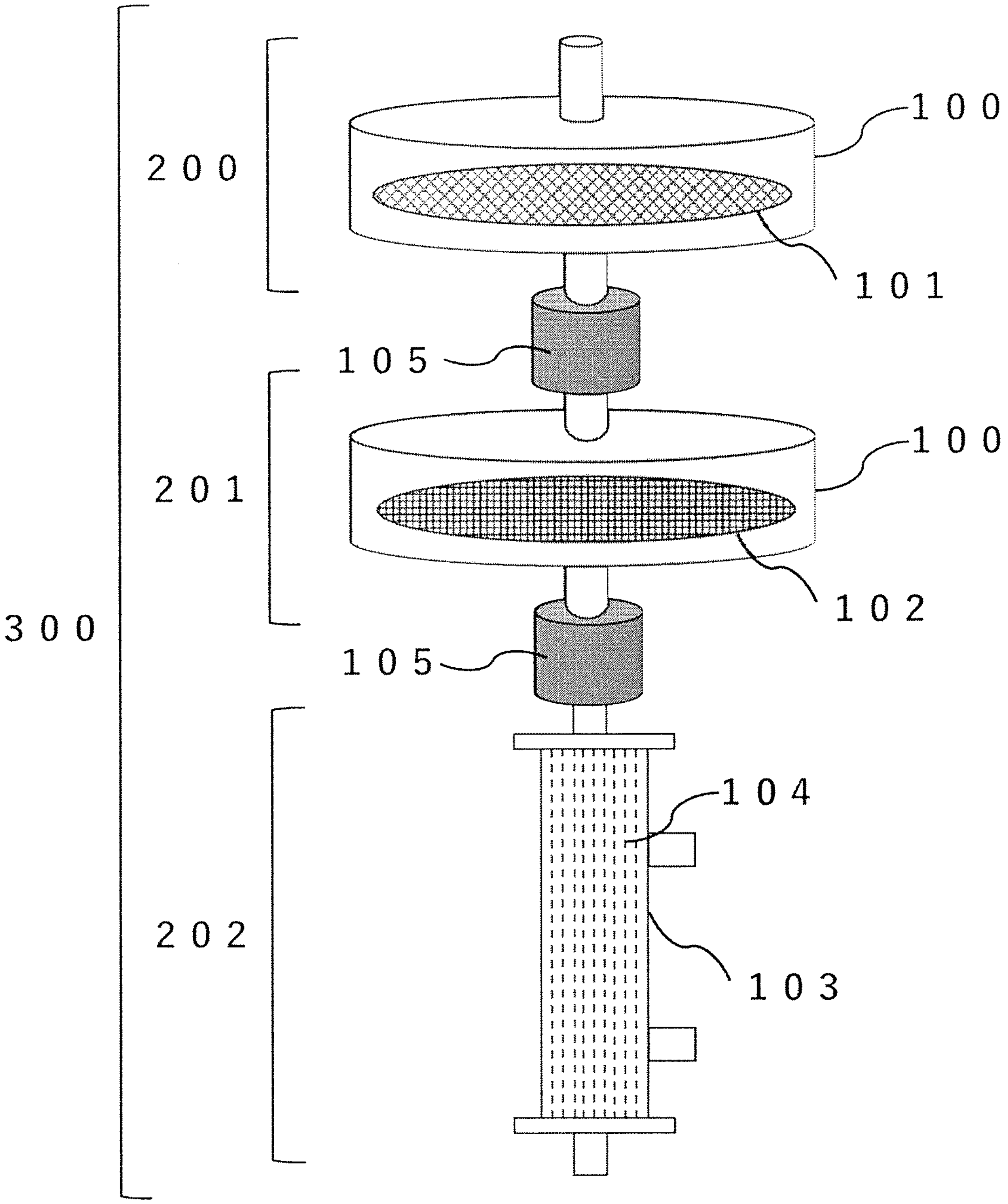


Fig.1

## Description

TECHNICAL FIELD

The present invention relates to a filter unit, a purification apparatus, and a method of producing purified liquid.

BACKGROUND ART

With the recent development of culture technology, there is a demand for the efficient purification of solutions containing biological substances produced by cells or similar biological entities. In particular, with the advancement of gene therapy and vaccine development, the need for cultivation and purification of viral vectors is increasing. Among the methods commonly used in gene therapy, those using viral vectors are particularly promising, and when producing viral vectors, it is desirable to efficiently purify the solution containing viral vectors. Furthermore, when producing vaccines, it is also desirable to efficiently purify the solution containing viral vectors.

For example, Patent Literature 1 discloses a method of purifying viral vectors by sequentially using filters with pores of a size that allows viral vectors to pass through but not cells and other cell culture components (impurities).

PRIOR ART DOCUMENTS

PATENT LITERATURE

Patent Literature 1 JP 2017-529070 A

SUMMARY OF THE INVENTION

PROBLEM TO BE SOLVED BY THE INVENTION

However, although Patent Literature 1 discloses a method of purifying cell fragments using a plurality of depth filters and screen filters with different pore sizes, the combination of the pore sizes of each filter has not been studied, which in some cases results in premature clogging and a rapid increase in pressure. Additionally, in such cases, there is a problem in that a large filter must be used to process a large volume.

An object of the present invention is to provide a filter unit, a purification apparatus, a purified liquid, and a method of producing purified liquid, wherein a filter suitable for the efficient purification of a solution containing a biological substance, specifically a biopharmaceutical (such as antibody drugs, gene therapy drugs, nucleic acid drugs, viral vectors, etc.), a food ingredient, or a beverage ingredient, particularly a viral vector, is arranged.

MEANS FOR SOLVING THE PROBLEMS

The present invention, which solves the above-mentioned problems, has the following configurations (1) to (19).

(1) A filter unit, comprising: a separation functional layer "a" section having an average pore diameter Da, a separation functional layer "b" section having an average pore diameter Db, and a separation functional layer "c" section having an average pore diameter Dc; and an inlet for introducing a liquid to be treated into the separation functional layer "a" section, wherein the average pore diameters Da, Db, and Dc satisfy the following conditions A and B, and wherein the separation functional layers are arranged in the order of the "a" section, "b" section, and "c" section from the inlet.

$$\text{Condition A: } 30\ \mu m \geq Da > Db > Dc \geq 0.01\ \mu m$$

$$\text{Condition B: } 6 \geq Da/Db \geq 2.8$$

(2) The filter unit according to (1), wherein the separation functional layer "a" section has a thickness Ta, the separation functional layer "b" section has a thickness Tb, the upper limit of each of the thickness Ta and the thickness Tb is 5 mm or less, and the following conditions C and D are satisfied.

$$\text{Condition C: Lower limit of thickness } Ta \text{ / average pore diameter } Da \geq 30$$

$$\text{Condition D: Lower limit of thickness Tb / average pore diameter Db} \geq 30$$

(3) The filter unit according to (1) or (2), wherein the separation functional layer "a" section and the separation layer "b" section are fibrous filters and have an average porosity of 70% or more and 95% or less.
(4) The filter unit according to any one of (1) to (3), wherein the separation functional layer ”c” section supports a polymer having a unit selected from the group consisting of a monocarboxylic acid vinyl ester unit, vinylpyrrolidone unit, vinylcaprolactam unit, vinylacetamide unit, and acrylamide unit.
(5) The filter unit according to any one of (1) to (4), wherein the separation functional layer "c" section is a hollow fiber membrane.
(6) The filter unit according to any one of (1) to (5), wherein the separation functional layer "b" section is a non-woven fabric with an average fiber diameter of 0.3 to 1.5 μm.
(7) The filter unit according to any one of (1) to (6), wherein the main component of the separation functional layer "a" section or the separation functional layer "b" section is a polyolefin.
(8) The filter unit according to any one of (1) to (7), wherein the separation functional layer "a" section or the separation functional layer "b" section supports a polymer having a unit selected from the group consisting of a monocarboxylic acid vinyl ester unit, vinylpyrrolidone unit, vinylcaprolactam unit, vinylacetamide unit, and acrylamide unit.
(9) The filter unit according to any one of (1) to (8), for use in the purification of a biological substance.
(10) The filter unit according to any one of (1) to (10), further comprising a housing having an inlet and an outlet, wherein the separation functional layer "a" section and the separation functional layer "b" section are joined and housed in the housing, and the filling factor of the separation functional layer "a" section and the separation functional layer "b" section is 30% or more and 95% or less.
(11) The filter unit according to (10), wherein the housing is a cylindrical housing, comprising a cylindrical inner core housed in the cylindrical housing, and the following condition E is satisfied:

$$\text{Condition E: } 50 \geq SA/IA > 1$$

SA: surface area of the separation functional layer "a" section on the inlet side of the cylindrical housing
IA: inner surface area of the cylindrical inner core on the outlet side of the cylindrical housing

(12) The filter unit according to (10) or (11), wherein the housing is a cylindrical housing, comprising a cylindrical inner core housed in the cylindrical housing, the separation functional layer "a" section and the separation functional layer "b" section are housed in the form of pleats, and the pleats have a height of ridge of 12 mm or more and 30 mm or less, and the number of ridges is 30 or more and 70 or less.
(13) The filter unit according to any one of (10) to (12), wherein the housing is a cylindrical housing, comprising a cylindrical inner core housed in the cylindrical housing, and the following condition F is satisfied:

$$\text{Condition F: } 4000 \geq ALV/ILV \geq 30$$

ALV: linear velocity at the separation functional layer "a" section on the inlet side of the cylindrical housing
ILV: linear velocity at the cylindrical inner core on the outlet side of the cylindrical housing

(14) The filter unit according to any one of (5) to (13), wherein the hollow fiber membrane contains a polysulfone-based polymer, the inner diameter of the hollow fiber membrane is 150 μm or more and 1500 μm or less, and the membrane thickness of the hollow fiber membrane is 20 μm or more and 300 μm or less.
(15) A purification apparatus for purifying a biological substance, comprising a pump, the filter unit according to any one of (1) to (14), and a pressure gauge, wherein the pressure gauge is connected to a connecting portion between the pump and the inlet of the filter unit and to a connecting portion of each housing in which each filter is housed.
(16) The purification apparatus according to (15), for use in the purification of a biopharmaceutical.
(17) The purification apparatus according to (15), for use in the purification of a food ingredient or a beverage ingredient.
(18) A biological substance purified by the purification apparatus according to (15).
(19) A method of producing purified liquid containing a biological substance, comprising: a step X of passing a liquid to be treated through a separation functional layer "a" section having an average pore diameter Da at a linear velocity in the range of 0.01 to 1.5 m/Hour to obtain a treated liquid X; a step Y of passing the treated liquid X through a separation functional layer "b" section having an average pore diameter Db at a linear velocity in the range of 0.001 to 1.5 m/Hour to obtain a treated liquid Y; and a step Z of passing the treated liquid Y through a separation functional layer "c" section

having an average pore diameter Dc at a linear velocity in the range of 0.00005 to 1.5 m/Hour to obtain a purified liquid; wherein the average pore diameters Da, Db, and Dc satisfy the following conditions A and B.

$$\text{Condition A: } 30\ \mu m \geq Da > Db > Dc \geq 0.01\ \mu m$$

$$\text{Condition B: } 6 \geq Da/Db \geq 2.8$$

Furthermore, the present invention has the following constitutions (20) to (35).

(20) A filter unit for purifying a biopharmaceutical, comprising at least three filters: a filter A having a separation functional layer "a" section with a pore diameter $D_a$ of 7.0 to 30.0 $\mu$m and a thickness $T_a$ of 0.20 mm or more; a filter B having a separation functional layer "b" section with a pore diameter $D_b$ of 1.0 to 6.0 $\mu$m and a thickness $T_b$ of 0.14 mm or more; and a filter C having a separation functional layer "c" section with a pore diameter $D_c$ of 0.02 to 0.30 $\mu$m and a thickness $T_c$ of 7.0 $\mu$m or more, wherein the separation functional layers are arranged in the order of the "a" section, "b" section, and "c" section.

(21) The filter unit according to (20), wherein the separation functional layer "b" section is a non-woven fabric with a fiber diameter of 0.30 to 1.50 $\mu$m and a basis weight of 20 g/m$^2$ or more.

(22) The filter unit according to (20) or (21), wherein the separation functional layer "a" section is a non-woven fabric with a fiber diameter of 1.60 to 3.00 $\mu$m and a basis weight of 24 g/m$^2$ or more.

(23) The filter unit according to any one of (20) to (22), wherein the non-woven fabric having the separation functional layer "a" section and the separation functional layer "b" section supports a polymer containing a monocarboxylic acid vinyl ester unit.

(24) The filter unit according to any one of (20) to (23), wherein the filter C is a hollow fiber membrane.

(25) The filter unit according to any one of (20) to (24), wherein the ratio $S_B/S_A$ of the contact area $S_B$ of the filter B to the contact area $S_A$ of the filter A is 1 to 10, and the ratio $S_C/S_A$ of the contact area $S_C$ of the filter C to the contact area $S_A$ of the filter A is 1 to 200.

(26) The filter unit according to any one of (20) to (25). wherein the main component of the separation functional layer "a" section and the separation functional layer "b" section is a polypropylene.

(27) The filter unit according to any one of (20) to (26), wherein the main component of the separation functional layer "c'' section is a polysulfone-based polymer.

(28) The filter unit according to (24), wherein the hollow fiber membrane is a hollow fiber membrane having an asymmetric structure that is coarse on the inner surface side and dense on the outer surface side.

(29) The filter unit according to (24) or (28), wherein the hollow fiber membrane supports a polymer containing a monocarboxylic acid vinyl ester unit.

(30) The filter unit according to (29), wherein the hollow fiber membrane supports the polymer containing the monocarboxylic acid vinyl ester unit on its outer surface and/or inner surface.

(31) The filter unit according to any one of (20) to (30), wherein the filter A and the filter B are joined and housed in a housing having an inlet and an outlet.

(32) The filter unit according to any one of (24) or (28) to (30), wherein the hollow fiber membrane is housed in a U-shape in a cylindrical housing.

(33) A purification apparatus, comprising a pump, the filter unit according to any one of (20) to (32), and a pressure gauge, wherein the pressure gauge is connected to the connecting portion between the pump and the inlet of the filter unit and to the connecting portion of each housing in which each filter is housed.

(34) A method of producing a purified liquid containing a biological product, comprising: a step X of passing a cell lysate through a filter A having a separation functional layer "a" section with a pore diameter $D_a$ of 7.0 to 30.0 $\mu$m and a thickness $T_a$ of 0.20 mm or more to obtain a treated liquid X; a step Y of passing the treated liquid X through a filter B having a separation functional layer "b" section with a pore diameter Db of 1.0 to 6.0 $\mu$m and a thickness $T_b$ of 0.14 mm or more to obtain a treated liquid Y; and a step Z of passing the treated liquid Y through a filter C having a separation functional layer "c" section with a pore diameter $D_c$ of 0.02 to 0.30 $\mu$m and a thickness $T_c$ of 7.0 $\mu$m or more to obtain a purified liquid.

(35) The biological product, a viral vector, or a gene therapy drug, purified by the method of producing purified liquid described in (15) above.

## EFFECT OF THE INVENTION

According to the present invention, when purifying a biological substance, specifically a biopharmaceutical (such as antibody drugs, gene therapy drugs, nucleic acid drugs, viral vectors, etc.), a food ingredient, or a beverage ingredient from a solution containing cell fragments such as a cell lysate and the like, and particularly when purifying a biopharmaceutical such as a gene therapy drug or a viral vector, clogging or pressure increase in the filter unit can be suppressed,

enabling efficient purification.

BRIEF DESCRIPTION OF THE DRAWINGS

Fig. 1 is a schematic diagram showing an embodiment of the filter unit of the present invention.
Fig. 2 is a schematic diagram showing another embodiment of the filter unit of the present invention.
Fig. 3 is a schematic diagram showing the purification apparatus of the present invention.
Fig. 4 is a schematic diagram showing another embodiment of the filter unit of the present invention.

MODES FOR CARRYING OUT THE INVENTION

In this specification, "to" shall represent a range including its lower and upper limit values.

(Filter Unit)

The filter unit of the present invention comprises a separation functional layer "a" section having an average pore diameter $D_a$, a separation functional layer "b" section having an average pore diameter $D_b$, and a separation functional layer "c" section having an average pore diameter $D_c$, and an inlet for introducing a liquid to be treated into the separation functional layer "a" section, wherein the average pore diameters $D_a$, $D_b$, and $D_c$ satisfy the following conditions A and B, and the separation functional layers are arranged in the order of the "a" section, "b" section, and "c'' section from the inlet.

$$\text{Condition A: } 30\ \mu m \geq D_a > D_b > D_c \geq 0.01\ \mu m$$

$$\text{Condition B: } 6 \geq D_a/D_b \geq 2.8$$

More specifically, it is a filter unit for purifying a biopharmaceutical, comprising at least three filters: a filter A having a separation functional layer "a" section with a pore diameter $D_a$ of 7.0 to 30.0 μm and a thickness $T_a$ of 0.20 mm or more; a filter B having a separation functional layer "b" section with a pore diameter $D_b$ of 1.0 to 6.0 μm and a thickness $T_b$ of 0.14 mm or more; and a filter C having a separation functional layer "c" section with a pore diameter $D_c$ of 0.02 to 0.30 μm and a thickness $T_c$ of 7.0 μm or more, wherein the separation functional layers are arranged in the order of the "a" section, "b" section, and "c" section.

A "filter unit" means a separation device that combines a plurality of filters such that a fluid flows in one direction, and can be used to remove impurities contained in a fluid such as a liquid or gas. The filters used in the filter unit may be a combination of a plurality of filters of the same material and average pore diameter, or a combination of a plurality of filters of different materials and pore sizes.

The filter unit also includes those in which a plurality of filters are housed in the same housing and those in which a plurality of housings, each housing a single filter or multiple filters, are connected. The method for connecting each housing may be any method that can be generally used, and the connection conditions are arbitrary. The filter unit has a simple structure and is easy to maintain, and is therefore suitably used as an in-line filter in a purification apparatus. Moreover, it can be used for both batch production (single-use) and continuous production, and is not limited by the production method.

The filter unit of the present invention need only have at least three types of filters, namely filter A, filter B, and filter C, that satisfy the above requirements, and may further include members used for purification such as other filters or adsorbents. Additionally, other filters or support materials may be present at the inlet and outlet of the filter unit.

A "separation functional layer" is a portion of a porous structure that exhibits separation performance in a filter. The entire filter may be a separation functional layer, or a part of the filter may be a separation functional layer while the remaining part is a support layer. In cases where the pore size is asymmetrically distributed or when integrated with a filter having multiple pore sizes, a single filter may have multiple separation functional layers, or the layer with the smaller pore size is designated as the separation functional layer.

The separation functional layer "a" section having an average pore diameter $D_a$ removes uncrushed cells and cell fragments in the cell lysate. The separation functional layer "b" section having an average pore diameter $D_b$ removes relatively small cell fragments that have passed through the separation functional layer "a" section. Furthermore, the separation functional layer "c" section having an average pore diameter $D_c$ removes impurities such as small cell fragments and the like that have passed through the separation functional layer "b" section. To meet these removal objectives, the average pore diameters $D_a$, $D_b$, and $D_c$ are set to satisfy the following conditions A and B.

$$\text{Condition A: } 30\ \mu m \geq D_a > D_b > D_c \geq 0.01\ \mu m$$

$$\text{Condition B: } 6 \geq D_a/D_b \geq 2.8$$

Furthermore, it is more preferable that the average pore diameters $D_b$, and $D_c$ satisfy the following condition AB.

$$\text{Condition AB: } 40 \geq D_b/D_c \geq 5$$

Also, to meet the removal objective, the above-mentioned separation functional layer "a" section, separation functional layer "b" section, and separation functional layer "c" section are arranged in the order of the "a" section, "b" section, and "c" section sequentially from the inlet for introducing the liquid to be treated. It is sufficient that at least three types of filters satisfy the above requirements, and members used for purification such as other filters or adsorbents, or support materials may be further included, and other filters or support materials may be present at the inlet and outlet of the filter unit.

From the viewpoint of achieving both separation performance and processing speed, it is preferable that the separation functional layer "a" section has a thickness $T_a$, the separation functional layer "b" section has a thickness $T_b$, the upper limit of each of the thickness $T_a$ and the thickness $T_b$ is 5 mm or less, and the following conditions C and D are satisfied.

$$\text{Condition C: lower limit of thickness } T_a \text{ / average pore diameter } D_a \geq 30$$

$$\text{Condition D: lower limit of thickness } T_b \text{ / average pore diameter } D_b \geq 30$$

Furthermore, it is more preferable that the separation functional layer "c" section has a thickness $T_c$, the lower limit of the thickness $T_c$ is 5 $\mu$m or more, and the following condition CD is satisfied.

$$\text{Condition CD: } 100 \geq \text{upper limit of thickness } T_c \text{ / average pore diameter } D_c$$

The separation functional layer "a" section and the separation functional layer "b" section are fibrous filters with an average porosity of 70% or more and 95% or less, preferably 75% or more and 83% or less from the viewpoint of achieving both separation performance and processing speed. From the viewpoint of applied pressure, it is further preferable that the average porosity of the separation functional layer "a" section is lower than the average porosity of the separation functional layer "b" section.

The average porosity can be measured by the method described in "Measurement of Porosity of Non-woven Fabric" described later.

Specifically, since the separation functional layer "a" section in filter A removes uncrushed cells and cell fragments in the cell lysate, the pore diameter $D_a$ is 7.0 to 30.0 $\mu$m, and the thickness $T_a$ is 0.20 mm or more. From the viewpoint of achieving both separation performance and processing speed, the pore diameter $D_a$ is more preferably 9.0 to 15.0 $\mu$m, and the thickness $T_a$ is more preferably 0.03 to 1.50 mm, and even more preferably 0.50 to 1.00 mm. Filter A may be either a depth filter that removes target substances internally or a screen filter that captures target substances on its surface. Among these, a depth filter is preferable because clogging is less likely to occur.

"Pore diameter" means the average pore diameter and can be measured by the method described in "Measurement of Pore Diameter of Non-woven Fabric" or "Measurement of Pore Diameter of Hollow Fiber Membrane" described later.

The pore diameter and thickness of the separation functional layer "a" section in filter A can be controlled, for example, by the temperature of the air blown at the nozzle outlet during the manufacturing of the non-woven fabric or by laminating the non-woven fabric.

The separation functional layer "a" section in filter A of the filter unit of the present invention is preferably a non-woven fabric with a fiber diameter of 1.60 to 3.00 $\mu$m and a basis weight of 24 $g/m^2$ or more, from the viewpoint of reducing pressure loss and efficiently capturing cell fragments larger than a specific size. From the viewpoint of achieving both separation performance and processing speed, the fiber diameter is more preferably 2.00 to 2.50 $\mu$m, and the basis weight is more preferably 40 to 80 $g/m^2$, and even more preferably 55 to 65 $g/m^2$.

Filter A may be composed only of the separation functional layer "a" section, or it may be integrally formed with other filters having a pore diameter of $D_a$ or larger.

"Fiber diameter" means the average fiber diameter and can be measured by the method described in

"Measurement of Fiber Diameter of Non-woven Fabric" described later.

Examples of the material constituting the separation functional layer "a" section in filter A include polyester or polyolefin. Among these, the main component of the separation functional layer "a" section is preferably a polyolefin, and it is more preferable that polypropylene, which is inexpensive, has excellent durability, and possesses a hydrophobic adsorption effect, is the main component of the material constituting the separation functional layer "a" section.

"Main component" means a component that constitutes 50% by mass or more of the entire material constituting the filter.

The separation functional layer "b" section in filter B removes relatively small cell fragments that have passed through filter A, and thus has a pore diameter $D_b$ of 1.0 to 6.0 $\mu$m and a thickness $T_b$ of 0.14 mm or more. From the viewpoint of achieving both separation performance and processing speed, the pore diameter $D_b$ is more preferably 2.0 to 4.0 $\mu$m, and the thickness $T_b$, is more preferably 0.20 to 1.50 mm, and even more preferably 0.40 to 1.00 mm. Filter B may be either a depth filter that captures target substances internally or a screen filter that captures target substances on its surface. Among these, a depth filter is preferable because clogging is less likely to occur.

The pore diameter and thickness of the separation functional layer "b" section in filter B can be controlled, for example, by the temperature of the air blown at the nozzle outlet during the manufacturing of the non-woven fabric or by laminating the non-woven fabric.

The separation functional layer "b" section in filter B of the filter unit of the present invention is preferably a non-woven fabric with a fiber diameter of 0.3 to 1.5 $\mu$m, from the viewpoint of reducing pressure loss and efficiently removing cell fragments larger than a specific size, and more preferably a non-woven fabric with a fiber diameter of 0.30 to 1.50 $\mu$m and a basis weight of 20 g/$m^2$ or more. From the viewpoint of achieving both separation performance and processing speed, the fiber diameter is more preferably 0.50 to 0.80 $\mu$m, and the basis weight is more preferably 30 to 80 g/$m^2$, and even more preferably 55 to 65 g/$m^2$.

The fiber diameter of the separation functional layer "b" section in filter B can be controlled, for example, by the resin discharge amount per spinning nozzle or the ejection amount per unit area of the air blown at the nozzle outlet, and the basis weight can be controlled by the resin discharge amount per spinning nozzle, etc.

The material constituting the separation functional layer "b" section in filter B is preferably a thermoplastic resin. Examples of the thermoplastic resin include polyester, polyolefin, polyamide, and polyphenylene sulfide. Among these, the main component of the separation functional layer "b" section is preferably a polyolefin, and more preferably polypropylene, which makes it easy to reduce the fiber diameter.

A known polypropylene can be used, but when manufactured by the melt-blowing method described later, it is preferable that the melt flow rate (hereinafter referred to as "MFR") is in the range of 10 g/10 min to 2000 g/10 min. The MFR, which indicates the fluidity of the molten resin, can be measured by the standard test method of JIS K7210-1:2014. For polypropylene, the measurement is performed under the conditions of 2.16 kg and 230°C (conditions specified for polypropylene in JIS K6921-2:2018).

The separation functional layer "b" section in filter B, which is a non-woven fabric, is preferably a melt-blown non-woven fabric. In the melt-blowing method, when a molten resin is discharged in a fibrous form from a spinning nozzle, the discharged fibrous molten resin is hit with a compressed gas such as air, etc. from both sides, and by entraining the gas, the fiber diameter can be made thinner. The melt-blowing method is preferable because it can easily produce a non-woven fabric composed of ultrafine fibers with a fiber diameter of 0.80 $\mu$m or less.

Filter B may be composed only of the separation functional layer "b" section, or it may be integrally formed with other filters having a pore diameter of $D_b$ or larger.

Although not particularly limited, in the filter unit of the present invention, from the viewpoint of suppressing clogging with a multi-stage filter, it is preferable that the non-woven fabric used as filters A and B has a uniform structure rather than a non-uniform structure such as an asymmetric one.

The separation functional layer "c" section in filter C removes small impurities such as cell fragments and the like that have passed through filter B, and thus has a pore diameter $D_c$ of 0.02 to 0.30 $\mu$m and a thickness $T_c$ of 7.0 $\mu$m or more. From the viewpoint of achieving both separation performance and processing speed, the pore diameter $D_c$ is more preferably 0.05 to 0.10 $\mu$m, and the thickness $T_c$ is more preferably 7.0 to 16.0 $\mu$m.

The separation functional layer "c" section in filter C may be either a depth filter that captures target substances internally or a screen filter that captures target substances on its surface.

The non-woven fabric used as filters A and B of the filter unit of the present invention preferably supports a polymer containing a monocarboxylic acid vinyl ester unit. vinylpyrrolidone unit, vinylcaprolactam unit, vinylacetamide unit, or acrylamide unit, and it is more preferable that it is supported on the back or front surface of the non-woven fabric. It is not necessary for it to be supported on both filters A and B; it may be supported on either filter A or B.

The polymer containing a monocarboxylic acid vinyl ester unit, vinylpyrrolidone unit, vinylcaprolactam unit, vinylacetamide unit, or acrylamide unit is preferably supported at least on the surface that the liquid to be treated first contacts, and it is more preferable that the polymer containing a monocarboxylic acid vinyl ester unit, vinylpyrrolidone unit, vinylcaprolactam unit, vinylacetamide unit, or acrylamide unit is supported on both the front and back surfaces.

Furthermore, it is preferable that the polymer containing a monocarboxylic acid vinyl ester unit, vinylpyrrolidone unit, vinylcaprolactam unit, vinylacetamide unit, or acrylamide unit is also supported inside the non-woven fabric. By supporting the polymer containing a monocarboxylic acid vinyl ester unit, vinylpyrrolidone unit, vinylcaprolactam unit, vinylacetamide unit, or acrylamide unit on all of the front surface, back surface internal portion of the non-woven fabric, the adhesion of proteins and the like can be effectively suppressed.

In the filter unit of the present invention, it is preferable that filter C is a hollow fiber membrane from the viewpoint that a sufficient contact area is easy to secure and the processing speed can be improved.

Examples of the material constituting the separation functional layer "c" section in filter C include crystalline polymers such as polyethylene, polypropylene or polyvinylidene fluoride, or amorphous polymers such as polysulfone (hereinafter referred to as "PSf", polyethersulfone or polymethyl methacrylate.

Among these, it is preferable to use a polysulfone-based polymer as the main component from the viewpoints of ease of molding into a hollow fiber membrane, and the strength and water permeability of the hollow fiber membrane. The content of the polysulfone-based polymer is preferably 75% by mass or more, more preferably 90% by mass or more, of the components constituting the separation functional layer "c" section. Furthermore, it is preferable that the entire filter C has a polysulfone-based polymer as its main component.

"Polysulfone-based polymer" means a polymer having an aromatic ring, a sulfonyl group, and an ether group in its main chain, and specific examples include PSf, polyethersulfone, and polyallyl ether sulfone. As the polysulfone-based polymer used in the present invention, a polymer having a repeating unit selected from the repeating units represented by the following general formula (I) or (II) is preferable.

[Chem 1]

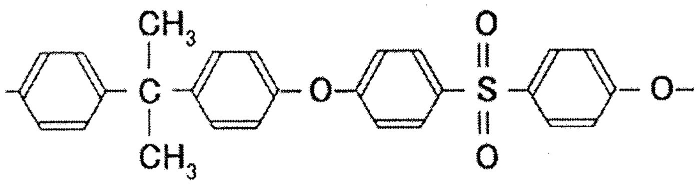

··· (I)

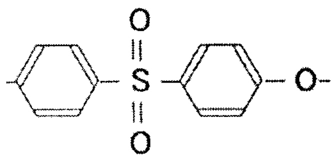

··· (II)

The polysulfone-based polymer may have other repeating units along with the repeating units represented by the above general formula (I) or (II), within a range that does not impair the effects of the present invention. In this case, the content of the other repeating units is preferably 10% by mass or less of the polysulfone-based polymer. Further, in the polysulfone-based polymer, hydrogen atoms of the hydrocarbon skeleton may be substituted with other atoms such as alkyl groups, functional groups, or halogens, and it may also be a modified form.

In the present invention, polysulfone-based polymers represented by general formula (III) or (IV), consisting only of the repeating units represented by the above general formula (I) or (II), are particularly suitably used, but the invention is not limited thereto.

[Chem 2]

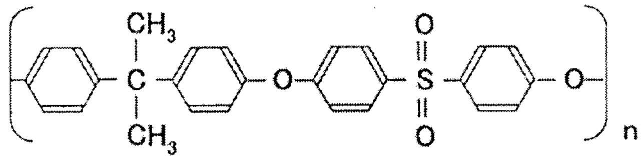

··· (III)

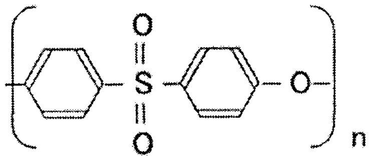

··· (IV)

(In general formulas (III) and (IV), n is an integer of 50 or more, and is preferably an integer of 50 to 200.)

Specific examples of such a polysulfone-based polymer include "Udel"(registered trademark) P-1700 and P-3500LCD (manufactured by Solvay), and "Ultrason"(R) S3010 or S6010 (manufactured by BASF). The above polysulfone-based polymers may be used alone or in a mixture of two or more kinds.

Although not particularly limited, in the filter unit of the present invention, it is preferable that the hollow fiber membrane used as filter C has an asymmetric structure. If it has an asymmetric structure, either the inner surface side or the outer surface side may be dense, and it may have a three-layer structure such as dense-coarse-dense or coarse-dense-coarse. Among these, a hollow fiber membrane having an asymmetric structure that is coarse on the inner surface side and dense on the outer surface side is preferable.

"An asymmetric structure that is coarse on the inner surface side and dense on the outer surface side" means that the hollow fiber membrane has a structure in which the pore size on the inner surface side is larger than the pore size on the outer surface side. A hollow fiber membrane having such an asymmetric structure has the advantage that it is easy to control the pore size of the separation functional layer, which is important for substance separation. In addition, a hollow fiber membrane having an asymmetric structure has both a dense region with a small pore size that contributes to the separation of substances to be removed, such as cell fragments, and a coarse region with a large pore size where water permeation resistance is low, which is preferable as it facilitates achieving both separation performance and water permeation performance.

The inner diameter of the hollow fiber membrane is preferably 150 μm or more and 1500 μm or less, and the membrane thickness of the hollow fiber membrane is preferably 20 μm or more and 300 μm or less, from the viewpoint of achieving both durability and a reduction in membrane volume, the inner diameter is more preferably 180 μm or more and 1000 μm or less, and the membrane thickness is more preferably 40 μm or more and 150 μm or less. Even more preferably, the inner diameter is 200 μm or more and 400 μm or less, and the membrane thickness is 50 μm or more and 100 μm or less.

The pore size and the thickness of the separation functional layer "c" section in the hollow fiber membrane used as filter C can be controlled by adjusting the phase separation speed. Specifically, the phase separation speed can be adjusted by the discharge temperature of the spinning dope, the concentration of the polymer in the spinning dope, or the solvent composition of the bore liquid, etc.

When using a hollow fiber membrane with an asymmetric structure that is coarse on the inner surface side and dense on the outer surface side as filter C, it is preferable to perform filtration from the inner surface side toward the outer surface side. By filtering from the surface with the larger pore size, the pressure increase due to clogging can be suppressed.

Filter C may be composed only of the separation functional layer "c" section.

The hollow fiber membrane used as filter C of the filter unit of the present invention preferably supports a polymer having a unit selected from the group consisting of a monocarboxylic acid vinyl ester unit, vinylpyrrolidone unit, vinylcaprolactam unit, vinylacetamide unit, and acrylamide unit, and it is more preferably supported on the outer surface and/or the inner surface of the hollow fiber membrane.

The polymer having a unit selected from the group consisting of a monocarboxylic acid vinyl ester unit, vinylpyrrolidone unit, vinylcaprolactam unit, vinylacetamide unit, and acrylamide unit is preferably supported at least

on the inner surface with which the liquid to be treated first comes into contact, and more preferably supported on both the inner and outer surfaces.

Furthermore, it is preferable that a polymer having a unit selected from the group consisting of a monocarboxylic acid vinyl ester unit, vinylpyrrolidone unit, vinylcaprolactam unit, vinylacetamide unit, and acrylamide unit is also supported inside the hollow fiber membrane. By supporting a polymer having a unit selected from the group consisting of a monocarboxylic acid vinyl ester unit, vinylpyrrolidone unit, vinylcaprolactam unit, vinylacetamide unit, and acrylamide unit on the inner surface, the outer surface, and the interior, the adhesion of proteins and the like can be effectively suppressed.

"Monocarboxylic acid" means a compound consisting of one carboxy group and a hydrocarbon group bonded to the carbon atom of the carboxy group, that is, a compound represented by "R-COOH" (R is a hydrocarbon group). The hydrocarbon group R may be either an aliphatic hydrocarbon group or an aromatic hydrocarbon group, but from the viewpoint of ease of synthesis, etc., it is preferably an aliphatic hydrocarbon group, particularly a saturated aliphatic hydrocarbon group. Also, from the viewpoint of manufacturing cost, the saturated aliphatic hydrocarbon group preferably has a linear structure or a branched structure, and more preferably a linear structure. Examples of monocarboxylic acids in which R is an aromatic hydrocarbon group include benzoic acid and its derivatives. Examples of monocarboxylic acids in which R is a saturated aliphatic hydrocarbon group include acetic acid, propanoic acid, and butyric acid.

The saturated aliphatic hydrocarbon group may have a linear structure such as an ethyl group, n-propyl group, n-butyl group, n-pentyl group, or n-hexyl group, as well as a branched structure such as isopropyl group or tertiary butyl group, or a cyclic structure such as cyclopropyl group or cyclobutyl group. Furthermore, it may contain an ether bond, an ester bond, etc., within the aliphatic chain. Although the hydrogen atoms of the hydrocarbon group R may be substituted with any substituent, when the terminal hydrogen atom is substituted with an anionic functional group such as a sulfonic acid group, it may destabilize the structure of proteins and induce adhesion to the hollow fiber membrane surface, so it is preferable that the terminal hydrogen atom is not substituted with an anionic functional group.

A small number of carbon atoms in the hydrocarbon group R is preferable for preventing adhesion because it lowers the hydrophobicity of the monocarboxylic acid and reduces the hydrophobic interaction with proteins. Therefore, the number of carbon atoms when the hydrocarbon group R is an aliphatic hydrocarbon group or an aromatic hydrocarbon group is preferably 1 to 20, more preferably 1 to 9, and even more preferably 2 to 5. When the hydrocarbon group R is a saturated aliphatic hydrocarbon group, the compound with 1 carbon atom is acetic acid, and the compound with 2 carbon atoms is propanoic acid.

"Unit" refers to a repeating unit in a homopolymer or copolymer obtained by polymerizing monomers, and " carboxylic acid vinyl ester unit" means a repeating unit obtained by polymerizing a carboxylic acid vinyl ester monomer, that is, a repeating unit represented by "$-CH(OCO-R)-CH_2-$".

R is the same as described for the monocarboxylic acid above, and preferred examples and the like are also in accordance with the above.

Specific examples of monocarboxylic acid vinyl ester units in which the hydrocarbon group R is saturated aliphatic include vinyl propanoate unit, vinyl pivalate unit, vinyl decanoate unit, and vinyl methoxyacetate unit. Since it is preferable that the hydrophobicity is not too strong, vinyl acetate unit (R: $CH_3$), vinyl propanoate unit (R: $CH_2CH_3$), vinyl butyrate unit (R: $CH_2CH_2CH_3$), vinyl pentanoate unit (R: $CH_2CH_2CH_2CH_3$), vinyl pivalate unit (R: $C(CH_3)_3$), or vinyl hexanoate unit (R: $CH_2CH_2CH_2CH_2CH_3$) is preferable. Specific examples of monocarboxylic acid vinyl ester units in which the hydrocarbon group R is aromatic include vinyl benzoate unit or its substituted form.

The fact that a polymer containing a monocarboxylic acid vinyl ester unit is supported on the outer surface and/or the inner surface of the hollow fiber membrane can be confirmed by combining a composition analysis by Time-of-Flight Secondary Ion Mass Spectrometry (hereinafter referred to as "TOF-SIMS") with a measurement by X-ray Photoelectron Spectroscopy (hereinafter referred to as "XPS").

Specifically, first, by the composition analysis by TOF-SIMS, a peak derived from the carboxylic acid ion of the vinyl monocarboxylic acid ester unit can be detected, so by analyzing its mass (m/z), the structure of the monocarboxylic acid can be identified.

In the composition analysis by TOF-SIMS, for example, when $Bi_3^{-+}$ is used as the primary ion species and secondary negative ions are detected, a peak at m/z = 59.02 corresponds to $C_2H_3O_2^-$, that is, acetic acid (aliphatic chain carbon number: 1). Also, a peak at m/z = 73.04 corresponds to $C_3H_5O_2^{--}$ , that is, propanoic acid (aliphatic chain carbon number: 2).

Furthermore, when XPS measurement is performed, a carbon peak derived from the ester group (COO) appears at +4.0 to 4.2 eV from the main peak of $CH_x$ or C-C (around 285 eV), so it can be understood that the above-mentioned carboxylic acid forms an ester bond. For the XPS measurement, a value measured at a measurement angle of 90° is used. When measured at a measurement angle of 90°, a region up to a depth of about 10 nm from the surface is detected.

From the two measurement results above, it can be confirmed that a polymer containing a monocarboxylic acid vinyl ester unit is supported on each surface or in the interior of the non-woven fabric used as filter A having the separation functional layer "a" section and filter B having the separation functional layer "b" section, or on each surface or in the interior of the hollow fiber membrane used as filter C having the separation functional layer "c" section.

From the viewpoint of exerting a protein adhesion suppression effect and preventing a decrease in the permeation performance of the hollow fiber membrane, the area percentage of the carbon peak derived from the ester group, when the total peak area derived from carbon on the outer surface and/or the inner surface of the hollow fiber membrane supporting the polymer containing the monocarboxylic acid vinyl ester unit is taken as 100 (atomic %), is preferably 0.1 to 25 (atomic %) or less, more preferably 1.0 to 20 (atomic %) or less, and even more preferably 1.5 to 10 (atomic %) or less. During the XPS measurement, measurements shall be taken at two locations on the hollow fiber membrane, and the average of the values from the two locations shall be used.

Furthermore, the amount of ester groups relative to the polysulfone-based polymer on the surface of the hollow fiber membrane supporting the polymer containing a monocarboxylic acid vinyl ester unit can be measured by attenuated total reflectance infrared spectroscopy (hereinafter referred to as "ATR").

In the obtained infrared absorption spectrum, a baseline is drawn at 1711-1759 $cm^{-1}$, and the area enclosed by this baseline and the positive part of the spectrum is taken as the peak area derived from the ester group ($A_{COO}$). Similarly, a baseline is drawn at 1549-1620 $cm^{-1}$, and the area enclosed by this baseline and the positive part of the spectrum is taken as the peak area derived from the benzene ring C=C of the polysulfone-based polymer ($A_{CC}$).

At this time, the average value of ($A_{COO}$)/($A_{CC}$) on the surface of the hollow fiber membrane supporting the polymer containing a monocarboxylic acid vinyl ester unit is preferably 0.01 to 1, more preferably 0.03 to 0.5, and even more preferably 0.05 to 0.3, from the viewpoint of imparting a protein adhesion suppression effect and from the viewpoint of suppressing the surface from becoming hydrophobic and preventing a decrease in the protein adhesion suppression effect.

The number average molecular weight of the polymer containing a monocarboxylic acid vinyl ester unit is preferably 1000 to 1,000,000. more preferably 5000 to 500,000, and even more preferably 10,000 to 100,000, from the viewpoint of sufficiently suppressing the adhesion of proteins and from the viewpoint of avoiding a decrease in the efficiency of introduction into the hollow fiber membrane. The number average molecular weight of the homopolymer or copolymer can be measured by gel permeation chromatography.

In the filter unit of the present invention, from the viewpoint of achieving both separation performance and water permeability, it is preferable to use it under conditions where the amount treated per product of contact area and separation functional layer thickness is 0.80 L/$cm^3$ or less in the separation functional layer "a" section, 1.00 L/$cm^3$ or less in the separation functional layer "b" section, and 20.00 L/$cm^3$ in the separation functional layer "c" section.

In the filter unit of the present invention, from the viewpoint of achieving both separation performance and water permeability, it is preferable to use it under conditions where the ratio of contact area ($m^2$) to separation functional layer thickness (m) is 7 or less in the separation functional layer "a" section, 10 or less in the separation functional layer "b" section, and 240 or less in the separation functional layer "c" section.

In the filter unit of the present invention, from the viewpoint of miniaturizing the filter unit, it is preferable that the ratio $S_A/S_B$ of the contact area of filter B (hereinafter referred to as "$S_B$") to the contact area of filter A (hereinafter referred to as "$S_A$") is 1 to 10, and the ratio $S_A/S_C$ of the contact area of filter C (hereinafter referred to as "Sc") to $S_A$ is 1 to 200.

Generally, when filtering a solution containing cell fragments, which has the largest amount of impurities, clogging is likely to occur, so the membrane area required for filtration becomes the largest, making it difficult to miniaturize the filter unit. On the other hand, the filter unit of the present invention, by appropriately setting the pore sizes and thicknesses of the separation functional layer "a" section in filter A, the separation functional layer "b" section in filter B, and the separation functional layer "c" section in filter C as described above, can reduce the required membrane area for each filter and can miniaturize the filter unit.

The filter unit of the present invention will be specifically described below, but the present invention is not limited by these embodiments.

The shape of the housing is not particularly limited, but a cylindrical, disk-type (spool-type), cartridge-type, or capsule-type is preferable, and a cylindrical housing is more preferable. Also, the material of the housing is not particularly limited, but a material having sterilizability, specifically, polypropylene, polyvinyl chloride, polyethylene, polyimide, polycarbonate, polysulfone, polymethylpentene, or polystyrene is preferable. As an adhesive for fixing the filter to the housing, common adhesive materials such as polyurethane resin, epoxy resin, and silicone resin can be preferably used.

One embodiment of the filter unit of the present invention is shown in Figure 1. Figure 1 shows a filter A-housed housing (200) having an inlet for introducing a liquid to be treated, in which a filter A (101), whose separation functional layer "a" section is a non-woven fabric, is housed in a housing 100 having an inlet and an outlet. It also shows a filter B-housed housing B (201) in which a filter B (102), whose separation functional layer "b" section is a non-woven fabric, is housed in a housing 100 having an inlet and an outlet. Furthermore, it shows a hollow fiber membrane-housed housing 202 having an outlet for discharging a purified liquid, in which a hollow fiber membrane filter C 104 having a separation functional layer "c" section is housed in a cylindrical housing 103 having an inlet and an outlet.

The filter unit of the present invention shown in Figure 1 is an example of a filter unit in which each housing is connected by a connecting portion 105 in the order of the filter A-housed housing 200, the filter B-housed housing 201, and the hollow fiber membrane-housed housing 202. In this way, the filter unit of the present invention can take a form in which

each housing that houses a respective filter is connected.

In this connected form, the above-mentioned separation functional layer "a" section, separation functional layer "b" section, and separation functional layer "c" section are arranged in the order of the "a" section, "b" section, and "c" section sequentially from the inlet for introducing the liquid to be treated. To constitute the filter unit of the present invention, it is sufficient that at least three types of filters satisfy the above requirements, and members used for purification such as other filters or adsorbents, or support materials may be further included, and other filters or support materials may be present at the inlet and outlet of the filter unit.

A second embodiment of the filter unit of the present invention is shown in Figure 2. Figure 2 shows a filter A, filter B-housed housing 203, in which a filter A (101) whose separation functional layer "a" section is a non-woven fabric and a filter B (102) whose separation functional layer "b" section is a non-woven fabric are housed in a joined state in a housing 100 having an inlet and an outlet, with filter A (101) arranged on the inlet side and filter B on the outlet side. It also shows a U-shaped hollow fiber membrane-housed housing 204, in which a U-shaped hollow fiber membrane 107, whose both end faces serve as the cut opening end faces of the inlet, is housed as filter C having a separation functional layer "c" section in a cylindrical housing 106. This is an example of a filter unit where the housings are connected by a connecting portion 105 in the order of the filter A, filter B-housed housing 203, and the U-shaped hollow fiber membrane-housed housing 204.

By thus joining filter A having the separation functional layer "a" section and filter B having the separation functional layer "b" section to make them integral, it becomes possible to make the entire filter unit more compact. Therefore, it is preferable that filter A and filter B are housed in the same housing in a joined state. Further, after joining filter A and filter B, higher-order processing such as pleating may be performed.

"Joining" means a state in which a plurality of filters are integrated, and includes a state where a plurality of filters are layered or a state where they are adhered by an adhesive or the like. It also encompasses, for example, a state where a filter for a spacer or the like is further provided between filter A and filter B and integrated, within the state where filter A and filter B are joined.

One embodiment of the purification apparatus of the present invention is shown in Figure 3. Figure 3 is an example of a purification apparatus for purifying a biological substance, in which a pump 108, a filter A, filter B-housed housing 203, and a U-shaped hollow fiber membrane-housed housing 204 are connected by connecting portions 105, respectively, and each connecting portion 105 is equipped with a pressure gauge 109.

A third embodiment of the filter unit of the present invention is shown in Figure 4. In Figure 4, a cylindrical inner core 111 is arranged inside a cylindrical housing 110 having an inlet and an outlet. Filter A (101) and filter B (102), which are non-woven fabrics, are joined and housed in a state of being wound around the cylindrical inner core 111, thereby forming a filter A, filter B-housed cylindrical housing (205). In this filter A, filter B-housed cylindrical housing (205), filter A (101) is arranged on the inlet side and filter B (102) is arranged on the outlet side, respectively. It also has a U-shaped hollow fiber membrane-housed housing 204. in which a U-shaped hollow fiber membrane 107, whose both end faces serve as the cut opening end faces of the inlet, is housed as filter C having a separation functional layer "c" section. These filter A, filter B-housed cylindrical housing (205) and U-shaped hollow fiber membrane-housed housing 204 are an example of a filter unit where the housings are connected by a connecting portion 105 in the order of the filter A, filter B-housed housing 203 and the U-shaped hollow fiber membrane-housed housing 204.

In the filter unit of the second embodiment of the present invention, from the viewpoints of increasing the effective area of the separation functional layer and the housing size, the filling factor of filter A and filter B calculated from the following formula (6) is preferably 30% or more and 95% or less, and more preferably 60% or more and 95% or less. The following formula (6) shall be used to calculate the filling factor of a filter unit that does not have internal components other than the filter, such as an inner core.

$$\text{Filling factor (\%)} = \text{Membrane area} \times \text{Membrane thickness} \times 100/\text{Volume inside the housing}$$

In the filter unit of the third embodiment of the present invention, from the viewpoints of increasing the effective area of the separation functional layer and the housing size, the filling factor of filter A and filter B calculated from the following formula (7) is preferably 30% or more and 95% or less, and more preferably 60% or more and 95% or less. The following formula (7) shall be used to calculate the filling factor of a filter unit having an inner core.

$$\text{Filling factor (\%)} = \text{Membrane area} \times \text{Membrane thickness} \times 100/(\text{Volume inside the housing} - \text{Volume of the inner core})$$

In the filter unit of the third embodiment of the present invention, from the viewpoints of increasing the effective area of the separation functional layer and the pressure drop inside the inner core, it is preferable to satisfy the following condition E.

$$\text{Condition E: } 50 \geq SA/IA > 1$$

SA: surface area of the separation functional layer "a" section on the inlet side of the cylindrical housing
IA: inner surface area of the cylindrical inner core on the outlet side of the cylindrical housing

Furthermore, it is even more preferable to satisfy the following condition EE.

$$\text{Condition EE: } 30 \geq SA/IA \geq 10$$

In the filter unit of the third embodiment of the present invention, filter A (101) and filter B (102) in the filter A, filter B-housed cylindrical housing 205 may be joined and then wound around the cylindrical inner core 111 in a pleated manner to form pleats, resulting in a pleated non-woven fabric. When forming pleats, from the viewpoints of increasing the effective area of the separation functional layer and suppressing clogging, it is preferable that the height of ridge of the pleats is 12 mm or more and 30 mm or less, and the number of ridges is 30 or more and 70 or less. It is more preferable that the height of ridge of the pleats is 12 mm or more and 20 mm or less, and the number of ridges is 50 or more and 70 or less.
In the filter unit of the third embodiment of the present invention, it is preferable that the filter A, filter B-housed cylindrical housing 205 satisfies the following condition F from the viewpoints of processing speed and clogging suppression.

$$\text{Condition F: } 4000 \geq ALV/ILV \geq 30$$

ALV: linear velocity in the separation functional layer "a" section on the inlet side of the cylindrical housing
ILV: linear velocity in the cylindrical inner core on the outlet side of the cylindrical housing

Furthermore, it is more preferable to satisfy the following condition FF.

$$\text{Condition FF: } 1000 \geq SA/IA \geq 100$$

In the above embodiments, the combination of housings containing filter A, filter B, and filter C is an example and is not particularly limited.
The filter unit and purification apparatus of the present invention can be suitably used for the purpose of purifying a biological substance. The purification apparatus of the present invention can be used for applications such as the purification of a biological substance, specifically a biopharmaceutical (such as antibody drugs, gene therapy drugs, nucleic acid drugs, viral vectors, etc.), or for the purification of a food ingredient or a beverage ingredient, and is particularly used for the application of purifying a biopharmaceutical containing a gene therapy drug or a viral vector.
Among these, it can be suitably used for the coarse purification application of recovering a viral vector from cell lysates containing viral vectors. It can also be suitably used for the application of purifying a biological substance from a culture medium containing cells, which has not been subjected to a disruption operation on the cell culture fluid.
The biological substance purified by the purification apparatus of the present invention has its turbidity reduced to one-third or less of the initial turbidity of the liquid to be treated, which improves the efficiency of the subsequent purification or concentration steps.
When used for the application of recovering a viral vector from cell lysates containing viral vectors, from the viewpoint of economy, the recovery rate of viral vectors is preferably 80% or more, and more preferably 90% or more. The turbidity of the purified solution, from the viewpoint of facilitating further purification, is preferably 30.0 NTU or less, more preferably 20.0 NTU or less, and even more preferably 10.0 NTU or less. 20.0 NTU is merely an example, and since it depends on the turbidity of the liquid to be treated, it is not limited to this value.

(Method of Producing Purified Liquid)

The method of producing a purified liquid containing a biological substance of the present invention comprises: a step X of passing a liquid to be treated through a separation functional layer "a" section having an average pore diameter $D_a$ at a linear velocity in the range of 0.01 to 1.5 m/Hour to obtain a treated liquid X; a step Y of passing the treated liquid X through a separation functional layer "b" section having an average pore diameter $D_b$ at a linear velocity in the range of 0.001 to 1.5 m/Hour to obtain a treated liquid Y; and a step Z of passing the treated liquid Y through a separation functional layer "c" section at a linear velocity in the range of 0.00005 to 1.5 m/Hour to obtain a purified liquid; wherein the average pore diameters $D_a$, $D_b$, and $D_c$ satisfy the following conditions A and B.

$$\text{Condition A: } 30\ \mu m \geq D_a > D_b > D_c \geq 0.01\ \mu m$$

$$\text{Condition B: } 6 \geq D_a/D_b \geq 2.8$$

In the method of producing purified liquid of the present invention, more specifically, it is a method of producing a purified liquid containing a biological product, comprising: a step X of passing a cell lysate through a filter A having a separation functional layer "a" section with a pore diameter $D_a$ of 7.0 to 30.0 $\mu$m and a thickness $T_a$ of 0.20 mm or more to obtain a treated liquid X; a step Y of passing the treated liquid X through a filter B having a separation functional layer "b" section with a pore diameter $D_b$ of 1.0 to 6.0 $\mu$m and a thickness $T_b$ of 0.14 mm or more to obtain a treated liquid Y; and a step Z of passing the treated liquid Y through a filter C having a separation functional layer "c" section with a pore diameter $D_c$ of 0.02 to 0.30 $\mu$m and a thickness $T_c$ of 7.0 $\mu$m or more to obtain a purified liquid.

In the above steps, each separation functional layer may be independently housed in its own housing, or two or more may be housed in the same housing. The shape of the housing is not particularly limited, but a cylindrical, disk-type (spool-type), cartridge-type, or capsule-type is preferable, and a cylindrical housing is more preferable. In order to perform the air removal step efficiently, it is more preferable that the housing has an air vent or air trap structure.

The "air removal step" is a step performed to remove air (bubbles) that stagnates inside the housing and to prevent a reduction in the contact area between the liquid to be treated and the filter due to the air, which would cause a decrease in processing efficiency and a rapid pressure increase. The implementation of the air removal step is not essential, but it is preferable to implement it from the viewpoint of processing efficiency. The air removal step is particularly important in a housing that contains a hollow fiber membrane. When a hollow fiber membrane is housed in a housing, it is preferable to remove the air stagnating in the cylindrical housing by supplying liquid from the inlet side with the housing arranged such that the inlet side is on the upper side in the direction of gravity, and the outlet side is on the lower side in the direction of gravity. Further, the liquid supplied in the air removal step is not particularly limited, but pure water or the same solvent as the liquid to be treated is preferable.

In order to move air generated during liquid passage to the upper part of the housing without letting it stay inside the housing, in the above step X, when the separation functional layer "a" section is built into the housing, it is preferable to pass the treated liquid X at a state wherein the housing is arranged such that the inlet side is on the upper side in the direction of gravity and the outlet side is on the lower side in the direction of gravity. In the above step Y, when the separation functional layer "b" section is built into the housing, it is preferable to pass the treated liquid X at a state wherein the housing arranged such that the inlet side is on the upper side in the direction of gravity and the outlet side is on the lower side in the direction of gravity. In the above step Z, when the separation functional layer "c" section is built into the housing, it is preferable to pass the treated liquid Y at a state wherein the housing is arranged such that the inlet side is on the upper side in the direction of gravity and the outlet side is on the lower side in the direction of gravity.

Here, "the housing is arranged such that the inlet side is on the upper side in the direction of gravity and the outlet side is on the lower side in the direction of gravity" means that when the inlet and the outlet are arranged at the top and bottom of the central part of the housing, the arrangement of the inlet and the outlet is in the range of 0 to 89 degrees, where 0 degrees is a state parallel to the direction of gravity and 90 degrees is a state perpendicular to it. It is preferable that the arrangement state of the inlet and the outlet of the housing is such that the arrangement of the inlet and the outlet of the housing is parallel to the direction in which gravity acts in all housings containing the separation functional layer a, the separation functional layer b, and the separation functional layer c.

As for the liquid passage method, a dead-end filtration method is preferable from the viewpoint of shortening the treatment time. At that time, in a hollow fiber membrane having a separation functional layer "c" section, it is preferable from the viewpoint of purification efficiency that the liquid to be treated passes from the support layer of the hollow fiber membrane toward the separation functional layer "c" section. When purifying a large amount of liquid to be treated over a long period, a tangential flow filtration (TFF) method is preferable from the viewpoint of extending the life of the membrane. At that time, in a hollow fiber membrane having a separation functional layer "c" section, it is preferable from the viewpoint of extending the life that the liquid to be treated passes from the separation functional layer "c" section of the hollow fiber membrane toward the support layer.

Furthermore, it is sufficient that at least three types of filters satisfy the above requirements during liquid passage, and other members used for purification such as another filter or an adsorbent, and support materials may be included, and another filter or support material may be provided at the inlet and outlet of the filter unit.

Hereinafter, as an example of a method of producing purified liquid, a method for producing a purified adeno-associated virus liquid from a high-cell-density suspension will be specifically described.

A high-cell-density suspension containing a high concentration of adeno-associated virus can be obtained, for example, by infecting a high-cell-density suspension obtained by the method disclosed in International Publication No. 2010/060719 with adeno-associated virus by a known method.

Generally, when purifying adeno-associated virus particles from a high-cell-density suspension, there is a step of

lysing most of the cells in the cell suspension to obtain a cell lysate. The lysis step includes, for example, freeze-thaw, solid shear, hypertonic and/or hypotonic lysis, liquid shear, sonication, high-pressure extrusion, detergent lysis, or a combination thereof, and the means thereof are not limited. Among them, the method using a lysing surfactant is preferable because it is simple and easily quantifiable. Examples of the surfactant include Triton and/or Polysorbate 80.

Step X is performed in which the cell lysate (liquid to be treated) obtained in the lysis step is passed through the separation functional layer "a" section having an average pore diameter $D_a$ at a linear velocity in the range of 0.01 to 1.5 m/Hour to obtain a treated liquid X. Next, step Y is performed in which the treated liquid X is passed through the separation functional layer "b" section having an average pore diameter Db at a linear velocity in the range of 0.001 to 1.5 m/Hour to obtain a treated liquid Y. Finally, step Z is performed in which the treated liquid Y is passed through the separation functional layer "c" section at a linear velocity in the range of 0.00005 to 1.5 m/Hour to obtain a purified liquid. Through these steps X, Y, and Z, adeno-associated virus can be purified with high efficiency.

More preferably, the adeno-associated virus can be purified with high efficiency by undergoing step X of passing the cell lysate (liquid to be treated) obtained in the lysis step through a filter A having a separation functional layer "a" section with a pore diameter $D_a$ of 7.0 to 30.0 μm and a thickness $T_a$ of 0.20 mm or more to obtain a treated liquid X; step Y of passing the treated liquid X through a filter B having a separation functional layer "b" section with a pore diameter $D_b$ of 1.0 to 6.0 μm and a thickness $T_b$ of 0.14 mm or more to obtain a treated liquid Y; and step Z of passing the treated liquid Y through a filter C having a separation functional layer "c'' section with a pore diameter $D_c$ of 0.02 to 0.30 μm and a thickness of 7.0 μm or more to obtain a purified liquid.

A biological substance, specifically a biopharmaceutical (such as antibody drugs, gene therapy drugs, nucleic acid drugs, viral vectors, etc.), a food ingredient, or a beverage ingredient, which are purified products purified by the method of producing purified liquid of the present invention, can be used, particularly as a vector or a gene therapy drug.

## Examples

Hereinafter, the filter unit and the production method of the present invention will be described with reference to Examples, but the present invention is not limited by these examples.

### Measurement of Thickness of Non-woven Fabric

For a test piece of non-woven fabric cut into 250 mm x 250 mm, the thickness (mm) of the central part of each side was measured with a dial thickness gauge, and the average value was calculated from the obtained values. The value was rounded to the second decimal place.

### Measurement of Basis Weight of Non-woven Fabric

Three test pieces of non-woven fabric cut into 250 mm × 250 mm were taken, the mass of each test piece was measured with an electronic balance, the average value was determined, and the average value was multiplied by 16 to calculate the basis weight. The value was obtained by rounding to the nearest integer.

### Measurement of Fiber Diameter of Non-woven Fabric

The surface of the non-woven fabric was observed at a magnification of 3000x using a scanning electron microscope (hereinafter referred to as "SEM," S-5500, manufactured by Hitachi High-Technologies Corporation), and a photograph was taken. Using the length measurement function of the electron microscope, the fiber diameter (μm) of 20 fibers that were in focus and not fused was measured, and the average value was calculated. The value was rounded to the first decimal place.

### Measurement of Maximum Pore Diameter of Non-woven Fabric

A test piece of non-woven fabric was completely wetted by impregnating it with a reagent (GALWICK, surface tension 15.9 dyn/cm = 15.9 mN/m), and the contact angle between the reagent and the non-woven fabric was made zero. The test piece of non-woven fabric impregnated with the reagent was set in a holder of an automatic pore size distribution measuring instrument (Model: CFP-1200AEXCS, manufactured by Porous Materials, Inc.), and measured according to the bubble point method (JIS K3832 (1990)). The maximum pore diameter was calculated from the obtained differential pressure using the following formula (1).

$$\text{Maximum pore diameter } (\mu m) = Cr/P \ ... \text{ Formula (1)}$$

C: pressure constant (2860)
r: surface tension of reagent (15.9 mN/m)
P: differential pressure (Pa)

The value was rounded to the first decimal place.

Measurement of Average Pore Diameter of Non-woven Fabric

A dry test piece of non-woven fabric was placed in an automatic pore size distribution measuring instrument (Model: CFP-1200AEXCS, manufactured by Porous Materials, Inc.), the air pressure applied to one side was gradually increased, and a dry flow curve showing the relationship between the pressure and flow rate when air passed through the dry test piece was measured. At this time, the pressure when air started to pass through the dry test piece was designated as P1. Next, based on the dry flow curve, a half-dry flow curve with half the permeation flow rate was prepared. Then, after immersing the test piece in a reagent (GALWICK, surface tension 15.9 dyn/cm = 15.9 mN/m), the same measurement was performed to obtain a wet flow curve.

The average pore diameter was calculated from the differential pressure Pc, which is the difference between the pressure P2 at the intersection of the half-dry flow curve and the wet flow curve and the above P1, using the following formula (2).

$$\text{Average pore diameter } (\mu\text{m}) = Cr/Pc \text{ ... Formula (2)}$$

C: pressure constant (2860)
r: surface tension of liquid (15.9 mN/m)
Pc: differential pressure (P2-P1, Pa)

The value was rounded to the first decimal place.

Measurement of Average Porosity of Non-woven Fabric

A small dry test piece was held in a holder and observed with a high-resolution 3D X-ray microscope (Model: nano3DX, manufactured by Rigaku Holdings Corporation) under the conditions of Cu for the X-ray source, a tube voltage of 40 kV, a tube current of 30 mA, and a resolution of 0.63 μm/voxel. An image was captured, and the Ambient Occlusion was calculated using image processing software (Avizo (manufactured by Thermo Fisher Scientific)). The contour was extracted along the morphology of the sample surface, and the average porosity inside the sample was calculated.

Measurement of Water Permeability of Hollow Fiber Membrane

The inside and outside of the hollow fiber membrane in the hollow fiber membrane-integrated housing were washed with distilled water for 30 minutes. A water pressure of 16 kPa was applied to the inside of the hollow fiber membrane, and the amount of water filtered out to the outside of the hollow fiber membrane per unit time was measured. The water permeability was calculated by the following formula (3). At this time, the length of the portion of the hollow fiber membrane filled in the housing to which no adhesive was attached was measured and used for the calculation of the membrane area.

$$\text{Water permeability } (\text{L/hour/kPa/m}^2) = Qw / (P \times T \times A) \text{ ... Formula (3)}$$

Qw: filtration amount (L)
T: outflow time (hour)
P: pressure (kPa)
A: membrane area ($m^2$)

The value was rounded to the nearest integer.

Measurement of Average Pore Diameter of Hollow Fiber Membrane

A hollow fiber membrane was immersed in water for 5 minutes, then frozen with liquid nitrogen, and the freeze-dried hollow fiber membrane was used as a measurement sample. When measuring the inner surface, the hollow fiber membrane was cut into a semi-cylindrical shape to expose the inner surface. Using an SEM (S-5500, manufactured by Hitachi High-Technologies Corporation), the surface of the separation functional layer side of the hollow fiber membrane was observed at a magnification of 5000x. and an image was captured. The size of the captured image was 640 pixels x 480 pixels. The diameter of each pore in a 15 μm x 15 μm range was measured using an image processing software (ImageJ, developed by the National Institutes of Health, USA).

The measurement of the 15 μm x 15 μm range was repeated until the total number of measured pores was 50 or more, and the data was added. When a pore was observed two layers in the depth direction, the exposed part of the deeper pore was measured. When a pore was partially outside the measurement range, that pore was excluded.

A SEM image was subjected to binarization processing to obtain an image in which the pore portions were black and the structural portions were white. When the structural part and the other parts could not be separated due to the difference in contrast in the image, the image was divided at the part with the same contrast, each part was binarized, and then they were joined together as they were to return to one image. Alternatively, binarization processing may be performed after painting the parts other than the structural part black. Dark brightness parts with 5 or less consecutive pixels were treated as bright brightness parts that are structures, because it is difficult to distinguish between noise and pores. Specifically, dark brightness parts with 5 or less consecutive pixels were excluded when counting the number of pixels. The number of pixels of the scale bar showing a known length in the image was measured, and the length per pixel was calculated.

The area of each pore obtained by the binarization treatment was measured by image analysis, the average pore diameter of each pore was determined by the following formula (4), and the average value was calculated.

$$\text{Average pore diameter } (\mu m) = (\text{Pore area } (\mu m^2) / \text{Pi})^{0.5} \times 2 \text{ ... Formula (4)}$$

The value rounded to the second decimal place was taken as the average pore diameter.

Measurement of Thickness of Separation Functional Layer of Hollow Fiber Membrane

A hollow fiber membrane was immersed in water for 5 minutes, then frozen with liquid nitrogen and immediately folded to expose a cross-section perpendicular to the longitudinal direction of the hollow fiber membrane, and the freeze-dried hollow fiber membrane was used as a measurement sample. The cross-section of the hollow fiber membrane was observed at 5000x with an SEM (S-5500, manufactured by Hitachi High-Technologies Corporation), and an image was captured so that the surface side where the structural part is dense was placed on the left side of the image. The size of the captured image was 640 pixels x 480 pixels.

For convenience, the following description explains a hollow fiber membrane having an asymmetric structure in which the inner surface side is coarse and the outer surface side is dense. In the case of a hollow fiber membrane having an asymmetric structure in which the outer surface side is coarse and the inner surface side is dense, the outer surface in the following description should be read as the inner surface, and the inner surface as the outer surface. When a hollow part of the hollow fiber membrane in the cross-section was observed to be occluded by SEM, the sample preparation was redone. The occlusion of the hollow part may occur when the hollow fiber membrane is deformed in a stress direction during the cutting process. In addition, when the separation functional layer was not fully visible within the observation field of view at the measurement magnification, two or more SEM images were combined so that the separation functional layer would fit.

For a SEM image, an image in which the pore portions were black and the structural portions were white was obtained by binarization processing. When the structural part and the other parts could not be separated due to the difference in contrast in the image, the image was divided at the part with the same contrast, each part was binarized, and then they were joined together as they were to return to one image. Alternatively, binarization processing may be performed after masking the parts other than the structural part black. When a pore was observed two layers in the depth direction, the shallower pore was measured.

The pore area was obtained by analyzing the area of the part displayed in black by the binarization processing of the above image, that is, the pore part, with an image processing software. The number of pixels of the scale bar showing a known length in the image was measured, and the length (μm) per pixel was calculated. Since the pore area that results in an average pore diameter of 0.6 μm is 0.28 $\mu m^2$, pores with a pore area of 0.28 $\mu m^2$ or more were identified as pores with an average pore diameter of 0.6 μm or more, and the layer where these pores were not observed was defined as the separation functional layer, and the thickness of the separation functional layer was measured in the direction perpendicular to the outer surface of the hollow fiber membrane.

Due to the influence of the manufacturing method of the hollow fiber membrane, a pore with a pore diameter exceeding 0.6 μm may be confirmed near the surface of the dense layer, or due to the influence of the image being out of focus, etc., a plurality of pores with a pore diameter of 0.6 μm or less near the surface of the dense layer may be recognized

as one pore. Therefore, if a pore with a pore diameter exceeding 0.6 μm was present at a position within 5% of the membrane thickness from the outer surface of the hollow fiber membrane (4 μm in the case of a membrane thickness of 80 μm), it was excluded as noise. Specifically, a perpendicular line was drawn to the surface, and the shortest distance from the surface on the perpendicular line to a pore with a pore diameter of 0.6 μm or more was determined.

Regarding the measurement of the thickness of the separation functional layer of the hollow fiber membrane based on the above method, the thickness was measured at five locations in the same image. Furthermore, the same measurement was performed on five images, and the average value of a total of 25 measurement data was calculated. The value was rounded to the first decimal place.

Preparation of Cell Lysate

Suspended HEK293 cells were cultured in a bioreactor (CR0003L200, manufactured by Merck) for 3 days to a cell density of 1.0 x $10^6$ cells/mL. A plasmid encoding the adeno-associated virus gene was transfected using a gene transfer reagent, and the culture was continued to produce the virus. After 72 hours, Triton-X100 and endonuclease were added and stirred for 1 hour to obtain a cell lysate containing adeno-associated virus.

Evaluation of Filterability of Cell Lysate

A pump set to a flow rate of 0.24 mL/min/$cm^2$ with respect to the contact area of filter A was connected to the inlet of the filter unit, and a pressure measurement unit was connected between the pump and the filter unit. In this state, 200 mL of cell lysate was filtered, and the value of increased pressure was measured. If the value of increased pressure exceeded 140 kPa, the filtration was stopped, and it was judged that clogging had occurred. In addition, the amount of treated liquid (L/$m^2$) with respect to the contact area of filter A was calculated, and for the purified liquid obtained before clogging occurred, "Turbidity measurement" and "Measurement of Recovery Rate of Viral Vector" described later were also performed.

Measurement of Turbidity

Each treated liquid was measured three times using a digital turbidimeter (TBD700, manufactured by AS ONE Corporation), and the average value was calculated from the obtained values. The value used was rounded to the first decimal place.

Measurement of Recovery Rate of Viral Vector

Using an adeno-associated viral vector titer quantification kit (AAVpo Titration Kit (for Real Time PCR), manufactured by Takara Bio Inc.), the cell lysate and the purified liquid were measured, and the recovery rate of viral vector was determined from the obtained values using the following formula (5).

$$\text{Recovery rate of viral vector (\%)} = \text{Virus titer of purified liquid (VG/mL)}/\text{Virus titer of cell lysate (VG/mL)} \times 100 \quad \text{Formula (5)}$$

Note that a value rounded to the nearest integer was used.

Preparation of Melt-blow Non-woven Fabric

Using polypropylene (AchieveTM 6936G2, manufactured by Exxon Mobil Corporation) as a raw material and a melt-blown non-woven fabric manufacturing apparatus, the die set temperature was 200°C, and the discharge rate per spinning nozzle with a diameter of 0.15 mm was set to 0.0075 g/min. Heated and compressed air (temperature: 175°C, jet volume per unit area: 57 $Nm^3$/sec/$m^2$) was blown from both sides of the spinning nozzles of the manufacturing apparatus, and spinning was performed onto a collection device at a distance of 100 mm from the spinning nozzles to obtain a melt-blown non-woven fabric B1 with a basis weight of about 15 g/$m^2$.

In addition, a melt-blown non-woven fabric B3 was obtained by changing the jet volume per unit area of the heated and compressed air to 73 Nm/sec/$m^2$.

Preparation of Hollow Fiber Membrane

15 parts by mass of PSf ("Utrason" (registered trademark) S6010, manufactured by BASF), 7 parts by mass of polyvinylpyrrolidone (hereinafter referred to as "PVP," K-90: molecular weight 1.2 million, manufactured by BASF), 75

parts by mass of dimethylacetamide (hereinafter referred to as "DMAc"), and 3 parts by mass of water were dissolved and stirred to prepare a spinning dope. The viscosity of this spinning dope at 37°C was 10 Pa·s. This spinning dope was discharged from the outer tube of a double-ring nozzle with an outer circumferential slit width of 0.15 mm kept at 37°C. In addition, an injection liquid of 56 parts by mass of DMAc, 29 parts by mass of PVP (K-30 manufactured by BASF: weight average molecular weight 40,000), and 15 parts by mass of glycerin was discharged from the inner tube.

The discharged spinning dope was passed through a 73 mm dry section and then immersed in a 90°C coagulation bath to coagulate, and then wound up through a water washing step. The wound hollow fiber membrane had an outer diameter of 460 μm and an inner diameter of 300 μm. The wound hollow fiber membrane was cut to a predetermined length, immersed and washed in 90°C hot water in a bundled state, then treated under dry heat at 170°C for 6 hours, immersed and washed again in 90°C hot water, and dried to obtain hollow fiber membrane C1. The obtained hollow fiber membrane C1 had an asymmetric structure with a coarse inner surface side and a dense outer surface side.

Using 15 of the obtained hollow fiber membranes C1, a housing with built-in hollow fiber membranes was fabricated by the method described in "Fabrication of Housing Containing Hollow Fiber Membranes" to be described later. An aqueous solution was prepared by dissolving a vinylpyrrolidone/vinyl propanoate random copolymer (mole fraction of vinyl propanoate units: 40%; number average molecular weight: 16,500) to a concentration of 50 ppm and ethanol to a concentration of 200 ppm. This solution was passed from the inside to the outside of the hollow fiber membranes to coat the entire membranes. Subsequently, the membranes were irradiated with 25 kGy of γ-rays to obtain a housing with built-in hollow fiber membranes, which incorporates the hollow fiber membranes C2 coated with the vinylpyrrolidone/vinyl propanoate random copolymer.

Further, a housing with built-in U-shaped hollow fiber membranes was fabricated by the method described later in "Fabrication of Housing Containing Hollow Fiber Membranes". The same coating operation as described above was performed to obtain a housing with built-in U-shaped hollow fiber membranes, which incorporates the hollow fiber membranes C2 coated with the copolymer.

A hollow fiber membrane was produced in the same manner as for hollow fiber membrane C1, except that a solution consisting of 17 parts by mass of PSf, 7 parts by mass of PVP (K-90). 73 parts by mass of DMAc, and 3 parts by mass of water was used as the spinning dope, and a solution consisting of 75 parts by mass of DMAc, 10 parts by mass of PVP (K-30), and 15 parts by mass of glycerin was used as the injection liquid. Then, the same operation as for hollow fiber membrane C2 was performed to obtain a housing containing hollow fiber membrane C3 coated with the copolymer. The outer diameter of the obtained hollow fiber membrane C3 was 487 μm, and the inner diameter was 320 μm.

A hollow fiber membrane was produced in the same manner as for hollow fiber membrane C1, except that a solution consisting of 18 parts by mass of PSf, 2 parts by mass of PVP (K-90), 5 parts by mass of PVP (K-30), 73 parts by mass of DMAc, and 2 parts by mass of water was used as the spinning dope. Then, the same operation as for hollow fiber membrane C2 was performed to obtain a housing containing hollow fiber membrane C4 coated with the copolymer. The outer diameter of the obtained hollow fiber membrane C4 was 420 μm, and the inner diameter was 275 μm.

A hollow fiber membrane was produced in the same manner as for hollow fiber membrane C1, except that the temperature of the spinning dope when discharged from the outer tube was 50°C. Then, the same operation as for hollow fiber membrane C2 was performed to obtain a housing containing hollow fiber membrane C5 coated with the copolymer. The outer diameter of the obtained hollow fiber membrane C3 was 458 μm, and the inner diameter was 303 μm.

A hollow fiber membrane was produced in the same manner as for hollow fiber membrane C1, except that a solution consisting of 18 parts by mass of PSf, 5 parts by mass of PVP (K-90), 10 parts by mass of PVP (K-30), 65 parts by mass of DMAc, and 2 parts by mass of water was used as the spinning dope. Then, the same operation as for hollow fiber membrane C2 was performed to obtain a housing containing hollow fiber membrane C6 coated with the copolymer. The outer diameter of the obtained hollow fiber membrane C6 was 407 μm, and the inner diameter was 291 μm.

Fabrication of Housing Containing Hollow Fiber Membranes

15 hollow fiber membranes were filled into a cylindrical housing with a diameter of about 5 mm and a length of about 12 cm, and both ends of the cylindrical housing and the hollow fiber membranes were fixed with "Quick Mender" (registered trademark, manufactured by Konishi Co., Ltd.), and then cut to open, thereby producing a housing containing hollow fiber membranes.

Fabrication of Housing Containing U-shaped Hollow Fiber Membranes

1200 U-shaped hollow fiber membranes were filled into a cylindrical housing with a diameter of about 50 mm and a length of 45 mm, and the ends of the cylindrical housing and the hollow fiber membranes were fixed with polyurethane resin, and then cut to open, thereby producing a housing containing U-shaped hollow fiber membranes.

[Example 1]

A filter unit 1 was produced by connecting the respective housings in the order of filter A, filter B, and filter C, where filter A was a filter with three stacked layers of non-woven fabric ("TORAYMICRON" (registered trademark), EM02010, manufactured by Toray Industries, Inc., hereinafter referred to as "non-woven fabric A1") as the separation functional layer "a" section, housed in a housing with a diameter of 47 mm (effective membrane area 1380 $mm^2$); filter B was a filter with four stacked layers of non-woven fabric B1 as the separation functional layer "b" section, housed in a housing with a diameter of 47 mm (effective membrane area 1380 $mm^2$); and a housing containing 15 of the aforementioned hollow fiber membranes C2 was used as filter C having the separation functional layer "c" section. The average porosity of the non-woven fabrics was 81.1% for non-woven fabric A1 and 86.6% for non-woven fabric B1.

For the production of purified liquid by filter unit 1, the liquid to be treated was passed through the housing containing filter A, the housing containing filter B, and the housing containing hollow fiber membranes in that order to produce a purified liquid. For the housing containing filter A, the housing containing filter B, and the housing containing hollow fiber membranes, an air removal step was performed before passing the liquid. The linear velocity for each separation functional layer during production was 0.14 m/Hour for filter A, 0.14 m/Hour for filter B, and 0.12 m/Hour for filter C.

[Example 2]

A filter unit 2 was produced by connecting the respective housings in the order of filter A, filter B, and filter C in the same manner as in Example 1, except that filter A was a filter with two stacked layers of non-woven fabric A1 as the separation functional layer "a" section.

For the production of purified liquid by filter unit 1, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 3]

A filter unit 3 was produced by connecting the respective housings in the order of filter A, filter B, and filter C in the same manner as in Example 1, except that filter B was a filter with two stacked layers of non-woven fabric B1 as the separation functional layer "b" section. For the production of purified liquid by filter unit 1, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 4]

A filter unit 4 was produced by connecting the respective housings in the order of filter A, filter B, and filter C in the same manner as in Example 1, except that hollow fiber membrane C1 was used as filter C having the separation functional layer "c" section.

For the production of purified liquid by filter unit 4, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 5]

Respective roll stock (width 50 cm x length 50 m) were mounted on a reciprocating folding machine (Model 3471, manufactured by Hop-Tec Co., Ltd.) so as to be laminated in the order of one porous support material made of polypropylene, filter A which is three layers of non-woven fabric A1 as the separation functional layer "a" section, filter B which is four layers of non-woven fabric B1 as the separation functional layer "b" section, and one polypropylene support material. After filter A and filter B with a height of ridge of 12 mm were joined, pleats were formed to produce a pleated non-woven fabric.

The pleated non-woven fabric was formed into a cylindrical shape with 60 ridges, with non-woven fabric A1 on the outside and non-woven fabric B1 on the inside, and its ends were joined with molten polypropylene to form a cylindrical filter AB.

The cylindrical filter was housed in a cylindrical housing with a diameter of about 80 mm and a length of about 120 mm (the inside of the housing is a cylinder with a diameter of 60 mm and a length of 75 mm, and the inside of the inner core is a cylinder with a diameter of 30 mm and a length of 75 mm) to produce a housing containing filter A and filter B (effective membrane area 108,000 $mm^2$).

As filter C having the separation functional layer "c" section, the aforementioned housing containing U-shaped hollow fiber membrane C2 was used.

A filter unit 5 was produced by connecting the housing containing filter A and filter B and the housing containing U-shaped hollow fiber membranes in that order.

For the production of purified liquid by filter unit 5. the liquid to be treated was passed through the housing containing filter A and filter B, and the housing containing hollow fiber membranes in that order to produce a purified liquid. For the housing containing filter A and filter B and the housing containing hollow fiber membranes, an air removal step was performed before passing the liquid. The linear velocity for each separation functional layer during production was 0.14 m/Hour for filter A, 0.14 m/Hour for filter B, and 0.12 m/Hour for filter C.

In Example 5, filterability evaluation of the cell lysate was performed using 15,000 mL of cell lysate.

[Comparative Example 1]

A filter unit 6 was produced by connecting the respective housings in the order of filter A, filter B, and filter C in the same manner as in Example 1, except that one glass fiber filter (ULTA Disc GF, 47 mm, 5.0 μm, manufactured by Cytiva) was used as filter A.

For the production of purified liquid by filter unit 6, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 2]

A filter unit 7 was produced by connecting the respective housings in the order of filter A, filter B, and filter C in the same manner as in Example 1, except that one layer of "AXTAR" (registered trademark, G2200-1S BK0, manufactured by Toray Industries, Inc., hereinafter referred to as "non-woven fabric A2") was used as filter A for the separation functional layer "a" section.

For the production of purified liquid by filter unit 7, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 3]

A filter unit 8 was produced by connecting the housings in the order of filter A, filter B, and filter C in the same manner as in Example 1, except that one PES membrane filter (ULTA Disc HC, 47 mm, 0.6 μm/0.2 μm, manufactured by Cytiva) was used with the 0.6 μm side as filter B and the 0.2 μm side as filter C, and housed in a housing with a diameter of 47 mm (effective membrane area 1380 $mm^2$).

For the production of purified liquid by filter unit 8, the liquid to be treated was passed in the same order as in Example 1 to produce a purified liquid. The linear velocity for each separation functional layer during production was 0.14 m/Hour for filter A, and 0.14 m/Hour for filters B and C.

[Comparative Example 4]

A filter unit 9 was produced by connecting the respective housings in the order of filter A, filter B, and filter C in the same manner as in Example 1, except that a filter with three stacked layers of non-woven fabric A1 was used as filter B for the separation functional layer "b" section. For the production of purified liquid by filter unit 9, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 5]

A filter unit 10 was produced by connecting the respective housings in the order of filter A, filter B, and filter C in the same manner as in Example 1, except that a filter with one layer of non-woven fabric A1 was used as filter A for the separation functional layer "a" section.

For the production of purified liquid by filter unit 10, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 6]

A filter unit 11 was produced by connecting the respective housings in the order of filter A, filter B, and filter C in the same manner as in Example 1, except that a filter with one layer of non-woven fabric B1 was used as filter B for the separation functional layer "b" section.
For the production of purified liquid by filter unit 11, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 6]

A filter unit 12 was produced by connecting the respective housings in the order of filter A, filter B, and filter C in the same manner as in Example 1, except that hollow fiber membrane C3 was used as filter C having the separation functional layer "c" section.
For the production of purified liquid by filter unit 12, the liquid to be treated was passed in the same order as in Example 1 to produce a purified liquid. The linear velocity for each separation functional layer during production was 0.14 m/Hour for filter A, 0.14 m/Hour for filter B, and 0.11 m/Hour for filter C.

[Comparative Example 7]

A filter unit 13 was produced by connecting the modules in the order of filter A, filter B, and filter C in the same manner as in Example 1, except that hollow fiber membrane C4 was used as filter C having the separation functional layer "c" section.
For the production of purified liquid by filter unit 13, the liquid to be treated was passed in the same order as in Example 1 to produce a purified liquid. The linear velocity for each separation functional layer during production was 0.14 m/Ilour for filter A, 0.14 m/Hour for filter B, and 0.13 m/Hour for filter C.

[Example 7]

A filter unit 14 was produced by connecting the respective housings in the order of filter A, filter B, and filter C in the same manner as in Example 1, except that hollow fiber membrane C5 was used as filter C having the separation functional layer "c" section.
For the production of purified liquid by filter unit 14, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 8]

Using a filter with three stacked layers of non-woven fabric A1 as the separation functional layer "a" section, it was housed in a housing with a diameter of 47 mm (effective membrane area 1380 $mm^2$), and an aqueous solution in which a vinylpyrrolidone/vinyl propanoate random copolymer (molar fraction of vinyl propanoate unit 40%, number average molecular weight 16,500) was dissolved to a concentration of 50 ppm and ethanol to a concentration of 200 ppm was passed from the housing inlet to the outlet to coat the entire non-woven fabric. Subsequently, 25 kGy of $\gamma$-rays were irradiated, and the non-woven fabric A3 coated with the vinylpyrrolidone/vinyl propanoate random copolymer was designated as filter A.
Using a filter with four stacked layers of non-woven fabric B1 as the separation functional layer "b" section, it was housed in a housing with a diameter of 47 mm (effective membrane area 1380 $mm^2$), and an aqueous solution in which a vinylpyrrolidone/vinyl propanoate random copolymer (molar fraction of vinyl propanoate unit 40%, number average molecular weight 16,500) was dissolved to a concentration of 50 ppm and ethanol to a concentration of 200 ppm was passed from the housing inlet to the outlet to coat the entire non-woven fabric. Subsequently, 25 kGy of $\gamma$-rays were irradiated, and the non-woven fabric B2 coated with the vinylpyrrolidone/vinyl propanoate random copolymer was designated as filter B.
Other than the above, a filter unit 15 was produced by connecting the respective housings in the order of filter A, filter B, and filter C in the same manner as in Example 1.
For the production of purified liquid by filter unit 15, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Example 9]

A filter unit 16 was produced by connecting the respective housings in the order of filter A, filter B, and filter C in the same manner as in Example 1, except that hollow fiber membrane C6 was used as filter C having the separation functional layer "c" section.
For the production of purified liquid by filter unit 16, the liquid to be treated was passed in the same order as in Example 1 to produce a purified liquid. The linear velocity for each separation functional layer during production was 0.14 m/Hour for filter A, 0.14 m/Hour for filter B, and 0.13 m/Hour for filter C.

[Comparative Example 8]

A filter unit 17 was produced by connecting the modules in the order of filter A, filter B, and filter C in the same manner as in Example 1, except that non-woven fabric B3 was used as filter B having the separation functional layer "b" section.
For the production of purified liquid by filter unit 17, the liquid to be treated was passed in the same order as in Example 1 to produce a purified liquid. The average porosity of non-woven fabric B3 was 67.6%. The linear velocity for each separation functional layer during production was 0.14 m/Hour for filter A, 0.14 m/Hour for filter B, and 0.12 m/Hour for filter C.

[Comparative Example 9]

A filter unit 18 was produced by connecting the respective housings in the order of filter A, filter B, and filter C in the same manner as in Example 1, except that a filter with 30 layers of non-woven fabric A1 was used as filter A for the separation functional layer "a" section.
For the production of purified liquid by filter unit 18, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 10]

A filter unit 19 was produced by connecting the respective housings in the order of filter A, filter B, and filter C in the same manner as in Example 1, except that a filter with 50 layers of non-woven fabric B1 was used as filter B for the separation functional layer "b" section.
For the production of purified liquid by filter unit 19, the liquid to be treated was passed in the same order as in Example 1 to produce a purified liquid. The linear velocity for each separation functional layer during production was 0.14 m/Hour for filter A, 0.14 m/Hour for filter B, and 0.12 m/Hour for filter C.

[Comparative Example 11]

A filter unit 20 was produced by connecting the respective housings in the order of filter A, filter B, and filter C in the same manner as in Example 1, except that a filter with four stacked layers of non-woven fabric B1 housed in a housing with a diameter of 47 mm (effective membrane area 1380 $mm^2$) was used as filter C for the separation functional layer "c" section.
For the production of purified liquid by filter unit 20, the liquid to be treated was passed in the same order as in Example 1 to produce a purified liquid. The linear velocity for each separation functional layer during production was 0.14 m/Hour for filter A, 0.14 m/Hour for filter B, and 0.14 m/Hour for filter C.
The results of filterability evaluation of the cell lysate and the measurement of turbidity and recovery rate of viral vector using the obtained filter units 1 to 20 are shown in Tables 1, 2, 3, and 4.

Table 1

| | | Example 1 | Example 2 | Example 3 | Example 4 | Example 5 |
|---|---|---|---|---|---|---|
| Level name | | Filter unit 1 | Filter unit 2 | Filter unit 3 | Filter unit 4 | Filter unit 5 |
| | Type | Non-woven fabric A1 | Non-woven fabric A 1 | Non-woven fabric A1 | Non-woven fabric A1 | Non-woven fabric A1 |
| | Number of fabric | 3 | 2 | 3 | 3 | 3 |

(continued)

| | | Example 1 | Example 2 | Example 3 | Example 4 | Example 5 |
|---|---|---|---|---|---|---|
| Filter A | Average pore diameter $D_a$ (μm) | 9.5 | 11 | 9.5 | 9.5 | 9.5 |
| | Maximum pore diameter (μm) | 29.4 | 28.1 | 29.4 | 29.4 | 29.4 |
| | Fiber diameter (μm) | 2.2 | 2.2 | 2.2 | 2.2 | 2.2 |
| | Thickness $T_a$ (mm) | 0.51 | 0.34 | 0.51 | 0.51 | 0.51 |
| | Basis weight (g/m$^2$) | 60 | 40 | 60 | 60 | 60 |
| | Contact area $S_A$ (mm$^2$) | 1380 | 1380 | 1380 | 1380 | 108000 |
| | Product of contact area per amount of liquid treated and thickness (L/cm$^3$) | 0.28 | 0.43 | 0.28 | 0.28 | 0.27 |
| Filter B | Type | Non-woven fabric B1 | Non-woven fabric B1 | Non-woven fabric B1 | Non-woven fabric B1 | Non-woven fabric B1 |
| | Number of fabric | 4 | 4 | 2 | 4 | 4 |
| | Average pore diameter $D_b$ (μm) | 2.2 | 2.2 | 3.2 | 2.2 | 2.2 |
| | Maximum pore diameter (μm) | 5.9 | 5.9 | 6.3 | 5.9 | 5.9 |
| | Fiber diameter (μm) | 0.72 | 0.72 | 0.72 | 0.72 | 0.72 |
| | Thickness $T_b$ (mm) | 0.44 | 0.44 | 0.22 | 0.44 | 0.44 |
| | Basis weight (g/m$^2$) | 60 | 60 | 30 | 60 | 60 |
| | Contact area $S_B$ (mm$^2$) | 1380 | 1380 | 1380 | 1380 | 108000 |
| | $S_B/S_A$ | 1.0 | 1.0 | 1.0 | 1.0 | 1.0 |
| | Product of contact area per amount of liquid treated and thickness (L/cm$^3$) | 0.33 | 0.33 | 0.66 | 0.33 | 0.32 |
| Da/Db | | 4.3 | 5.0 | 3.0 | 4.3 | 4.3 |
| $T_a \times 1000 - D_a \times 30$ | | 225 | 10 | 225 | 225 | 225 |
| $T_b \times 1000 - D_b \times 30$ | | 374 | 374 | 124 | 374 | 374 |
| Filter C | Type | Hollow fiber membrane C2 | Hollow fiber membrane C2 | Hollow fiber membrane C2 | Hollow fiber membrane C1 | Hollow fiber membrane C2 |
| | Number of fibers (Number of fabrics in Comparative Example 11) | 15 | 15 | 15 | 15 | 1200 |
| | Average pore diameter $D_c$ (μm) | 0.16 | 0.16 | 0.16 | 0.16 | 0.16 |
| | Water permeability (L/hr/kPa/m$^2$) | 95 | 95 | 95 | 95 | 95 |
| | Thickness $T_c$ (μm) | 7.4 | 7.4 | 7.4 | 7.4 | 7.4 |
| | Contact area Sc (mm$^2$) | 1626 | 1626 | 1626 | 1626 | 130062 |
| | $S_c/S_A$ | 1.2 | 1.2 | 1.2 | 1.2 | 1.2 |
| | Product of contact area per amount of liquid treated and thickness (L/cm$^3$) | 16.62 | 16.62 | 16.62 | 16.62 | 15.59 |

(continued)

| | | Example 1 | Example 2 | Example 3 | Example 4 | Example 5 |
|---|---|---|---|---|---|---|
| Filter ability | Value of increased pressure (kPa) | 33.1 | 31.2 | 31.0 | 46.1 | 38.6 |
| | Liquid treated ($L/m^2$) | 144.9 | 144.9 | 144.9 | 144.9 | 138.9 |
| | Turbidity (NTU) | 7.4 | 9.8 | 8.2 | 9.6 | 8.1 |
| | Recovery Rate of viruses (%) | 93.4 | 93.3 | 93.1 | 92.3 | 92.1 |

Table 2

| | | Comparative example 1 | Comparative example 2 | Comparative example 3 | Comparative example 4 | Comparative example 5 |
|---|---|---|---|---|---|---|
| | Level name | Filter unit 6 | Filter unit 7 | Filter unit 8 | Filter unit 9 | Filter unit 10 |
| Filter A | Type | Glass fiber filter | Non-woven fabric A3 | Non-woven fabric A1 | Non-woven fabric A1 | Non-woven fabric A1 |
| | Number of fabric | 1 | 1 | 3 | 3 | 1 |
| | Average pore diameter Da (μm) | 5.7 | | 9.5 | 9.5 | 12.6 |
| | Maximum pore diameter (μm) | 17.1 | 57 | 29.4 | 29.4 | 41.1 |
| | Fiber diameter (μm) | 1.1 | 23 | 2.2 | 2.2 | 2.2 |
| | Thickness Ta (mm) | 0.43 | 0.53 | 0.51 | 0.51 | 0.17 |
| | Basis weight ($g/m^2$) | | 200 | 60 | 60 | 20 |
| | Contact area $S_A$ ($mm^2$) | 1380 | 1380 | 1380 | 1380 | 1380 |
| | Product of contact area per amount of liquid treated and thickness ($L/cm^3$) | 0.34 | 0.27 | 0.28 | 0.28 | 0.85 |
| Filter B | Type | Non-woven fabric B1 | Non-woven fabric B 1 | PES membrane filter | Non-woven fabric A1 | Non-woven fabric B1 |
| | Number of fabric | 4 | 4 | 1 | 3 | 4 |
| | Average pore diameter Db (μm) | 2.2 | 2.2 | 0.5/0.2 | 9.5 | 2.2 |
| | Maximum pore diameter (μm) | 5.9 | 5.9 | 1.3 | 29.4 | 5.9 |
| | Fiber diameter (μm) | 0.72 | 0.72 | | 2.2 | 0.72 |
| | Thickness Tb (mm) | 0.44 | 0.44 | 0.25 | 0.51 | 0.44 |
| | Basis weight ($g/m^2$) | 60 | 60 | | 60 | 60 |
| | Contact area SB ($mm^2$) | 1380 | 1380 | 1380 | 1380 | 1380 |
| | SB/SA | 1.0 | 1.0 | 1.0 | 1.0 | 1.0 |
| | Product of contact area per amount of liquid treated and thickness ($L/cm^3$) | 0.33 | 0.33 | 0.58 | 0.28 | 0.33 |

(continued)

| | | Comparative example 1 | Comparative example 2 | Comparative example 3 | Comparative example 4 | Comparative example 5 |
|---|---|---|---|---|---|---|
| Da/Db | | 2.6 | 15.0 | 19.0 | 1.0 | 5.7 |
| Ta×1000-Da×30 | | 259 | -460 | 225 | 225 | -208 |
| Tb×1000-Db×30 | | 374 | 374 | 235 | 225 | 374 |
| Filter C | Type | Hollow fiber membrane C2 | Hollow fiber membrane C2 | Included in filter B | Hollow fiber membrane C2 | Hollow fiber membrane C2 |
| | Number of fibers (Number of fabrics in Comparative Example 11) | 15 | 15 | | 15 | 15 |
| | Average pore diameter Dc (μm) | 0.16 | 0.16 | | 0.16 | 0.16 |
| | Water permeability (L/hr/kPa/$m^2$) | 95 | 95 | | 95 | 95 |
| | Thickness Tc (μm) | 7.4 | 7.4 | | 7.4 | 7.4 |
| | Contact area SC ($mm^2$) | 1626 | 1626 | | 1626 | 1626 |
| | Sc/SA | 1.2 | 1.2 | | 1.2 | 1.2 |
| | Product of contact area per amount of liquid treated and thickness (L/$cm^3$) | 16.62 | 16.62 | | 16.62 | 16.62 |
| Filter ability | Value of increased pressure (kPa) | 91.5 | Clogging | Clogging | Clogging | 127.6 |
| | Liquid treated (L/$m^2$) | 144.9 | 29.0 | 14.5 | 58.0 | 144.9 |
| | Turbidity (NTU) | 10.2 | 11.6 | 16.9 | 8.3 | 11.2 |
| | Recovery Rate of viruses (%) | 79.4 | 57.1 | 50.8 | 72.5 | 78.1 |

Table 3

| | | Comparative example 6 | Example 6 | Comparative example 7 | Example 7 | Example 8 |
|---|---|---|---|---|---|---|
| Level name | | Filter unit 11 | Filter unit 12 | Filter unit 13 | Filter unit 14 | Filter unit 15 |
| Filter A | Type | Non-woven fabric A1 | Non-woven fabric A1 | Non-woven fabric A1 | Non-woven fabric A1 | Non-woven fabric A3 |
| | Number of fabric | 3 | 3 | 3 | 3 | 3 |
| | Average pore diameter $D_a$ (μm) | 9.5 | 9.5 | 9.5 | 9.5 | 9.5 |
| | Maximum pore diameter (μm) | 29.4 | 29.4 | 29.4 | 29.4 | 29.4 |
| | Fiber diameter (μm) | 2.2 | 2.2 | 2.2 | 2.2 | 2.2 |
| | Thickness $T_a$ (mm) | 0.51 | 0.51 | 0.51 | 0.51 | 0.51 |

(continued)

| | | Comparative example 6 | Example 6 | Comparative example 7 | Example 7 | Example 8 |
|---|---|---|---|---|---|---|
| | Basis weight ($g/m^2$) | 60 | 60 | 60 | 60 | 60 |
| | Contact area $S_A$ ($mm^2$) | 1380 | 1380 | 1380 | 1380 | 1380 |
| | Product of contact area per amount of liquid treated and thickness ($L/cm^3$) | 0.28 | 0.28 | 0.28 | 0.28 | 0.28 |
| Filter B | Type | Non-woven fabric B1 | Non-woven fabric B1 | Non-woven fabric B1 | Non-woven fabric B1 | Non-woven fabric B2 |
| | Number of fabric | 1 | 4 | 4 | 4 | 4 |
| | Average pore diameter $D_b$ (μm) | 3.8 | 2.2 | 2.2 | 2.2 | 2.2 |
| | Maximum pore diameter (μm) | 7.1 | 5.9 | 5.9 | 5.9 | 5.9 |
| | Fiber diameter (μm) | 0.72 | 0.72 | 0.72 | 0.72 | 0.72 |
| | Thickness $T_b$ (mm) | 0.11 | 0.44 | 0.44 | 0.44 | 0.44 |
| | Basis weight ($g/m^2$) | 15 | 60 | 60 | 150 | 60 |
| | Contact area $S_B$ ($mm^2$) | 1380 | 1380 | 1380 | 1380 | 1380 |
| | $S_B/S_A$ | 1.0 | 1.0 | 1.0 | 1.0 | 1.0 |
| | Product of contact area per amount of liquid treated and thickness ($L/cm^3$) | 1.31 | 0.33 | 0.33 | 0.33 | 0.33 |
| Da/Db | | 2.5 | 4.3 | 4.3 | 4.3 | 4.3 |
| $T_a \times 1000 - D_a \times 30$ | | 225 | 225 | 225 | 225 | 225 |
| $T_b \times 1000 - D_b \times 30$ | | -4 | 374 | 374 | 374 | 374 |
| Filter C | Type | Hollow fiber membrane C2 | Hollow fiber membrane C3 | Hollow fiber membrane C4 | Hollow fiber membrane C5 | Hollow fiber membrane C2 |
| | Number of fibers (Number of fabrics in Comparative Example 11) | 15 | 15 | 15 | 15 | 15 |
| | Average pore diameter $D_c$ (μm) | 0.16 | 0.45 | 0.008 | 0.27 | 0.16 |
| | Water permeability ($L/hr/kPa/m^2$) | 95 | 492 | 3 | 187 | 95 |
| | Thickness $T_c$ (μm) | 7.4 | 9.1 | 12.1 | 4.6 | 7.4 |
| | Contact area Sc ($mm^2$) | 1626 | 1734 | 1490 | 1642 | 1626 |
| | $S_c/S_A$ | 1.2 | 1.3 | 1.1 | 1.2 | 1.2 |
| | Product of contact area per amount of liquid treated and thickness ($L/cm^3$) | 16.62 | 12.67 | 11.09 | 26.48 | 16.62 |

(continued)

| | | Comparative example 6 | Example 6 | Comparative example 7 | Example 7 | Example 8 |
|---|---|---|---|---|---|---|
| Filter ability | Value of increased pressure (kPa) | Clogging | 28.9 | Clogging | 30.1 | 29.5 |
| | Liquid treated (L/$m^2$) | 87.0 | 144.9 | 3.6 | 144.9 | 144.9 |
| | Turbidity (NTU) | 8.9 | 23.0 | 4.3 | 22.0 | 7.5 |
| | Recovery Rate of viruses (%) | 73.3 | 93.4 | 0.0 | 92.4 | 96.7 |

Table 4

| | | Example 9 | Comparative example 8 | Comparative example 9 | Comparative example 10 | Comparative example 11 |
|---|---|---|---|---|---|---|
| Level name | | Filter unit 16 | Filter unit 17 | Filter unit 18 | Filter unit 19 | Filter unit 20 |
| Filter A | Type | Non-woven fabric A1 | Non-woven fabric A1 | Non-woven fabric A 1 | Non-woven fabric A 1 | Non-woven fabric A 1 |
| | Number of fabric | 3 | 3 | 30 | 3 | 3 |
| | Average pore diameter $D_a$ (μm) | 9.5 | 9.5 | 5.3 | 9.5 | 9.5 |
| | Maximum pore diameter (μm) | 29.4 | 29.4 | 21.2 | 29.4 | 29.4 |
| | Fiber diameter (μm) | 2.2 | 2.2 | 2.2 | 2.2 | 2.2 |
| | Thickness $T_a$ (mm) | 0.51 | 0.51 | 5.1 | 0.51 | 0.51 |
| | Basis weight (g/$m^2$) | 60 | 60 | 600 | 60 | 60 |
| | Contact area $S_A$ ($mm^2$) | 1380 | 1380 | 1380 | 1380 | 1380 |
| | Product of contact area per amount of liquid treated and thickness (L/$cm^3$) | 0.28 | 0.28 | 0.03 | 0.28 | 0.28 |
| Filter B | Type | Non-woven fabric B1 | Non-woven fabric B3 | Non-woven fabric B1 | Non-woven fabric B1 | Non-woven fabric B1 |
| | Number of fabric | 4 | 4 | 4 | 50 | 4 |
| | Average pore diameter $D_b$(μm) | 2.2 | 3.4 | 2.2 | 1.1 | 2.2 |
| | Maximum pore diameter (μm) | 5.9 | 11.3 | 5.9 | 4.8 | 5.9 |
| | Fiber diameter (μm) | 0.72 | 0.91 | 0.72 | 0.72 | 0.72 |
| | Thickness $T_b$ (mm) | 0.44 | 0.44 | 0.44 | 5.5 | 0.44 |
| | Basis weight (g/$m^2$) | 60 | 60 | 60 | 750 | 60 |
| | Contact area $S_B$ ($mm^2$) | 1380 | 1380 | 1380 | 1380 | 1380 |
| | $S_B/S_A$ | 1.0 | 1.0 | 1.0 | 1.0 | 1.0 |

(continued)

| | | Example 9 | Comparative example 8 | Comparative example 9 | Comparative example 10 | Comparative example 11 |
|---|---|---|---|---|---|---|
| | Product of contact area per amount of liquid treated and thickness ($L/cm^3$) | 0.33 | 0.33 | 0.33 | 0.03 | 0.33 |
| DalDb | | 4.3 | 2.8 | 2.4 | 8.6 | 4.3 |
| $T_a \times 1000 - D_a \times 30$ | | 225 | 225 | 4941 | 225 | 225 |
| $T_b \times 1000 - D_b \times 30$ | | 374 | 338 | 374 | 5467 | 374 |
| Filter C | Type | Hollow fiber membrane C6 | Hollow fiber membrane C2 | Hollow fiber membrane C2 | Hollow fiber membrane C2 | Non-woven fabric B 1 |
| | Number of fibers (Number of fabrics in Comparative Example 11) | 15 | 15 | 15 | 15 | 4 |
| | Average pore diameter $D_c$ (μm) | 0.03 | 0.16 | 0.16 | 0.16 | 2.2 |
| | Water permeability ($L/hr/kPa/m^2$) | 49 | 95 | 95 | 95 | |
| | Thickness $T_c$ (μm) | 15.0 | 7.4 | 7.4 | 7.4 | 440 |
| | Contact area Sc ($mm^2$) | 1577 | 1626 | 1626 | 1626 | 1380 |
| | $S_c/S_A$ | 1.1 | 1.2 | 1.2 | 1.2 | 1.0 |
| | Product of contact area per amount of liquid treated and thickness ($L/cm^3$) | 8.45 | 16.62 | 16.62 | 16.62 | 0.33 |
| Filter ability | Value of increased pressure (kPa) | 43.5 | Clogging | 82.1 | 91.2 | 27.9 |
| | Liquid treated ($L/m^2$) | 144.9 | 36.2 | 144.9 | 144.9 | 144.9 |
| | Turbidity (NTU) | 6.4 | 8.1 | 9.2 | 8.9 | 31.8 |
| | Recovery Rate of viruses (%) | 92.3 | 61.1 | 75.1 | 72.8 | 94.1 |

As shown in the results of Example 1, by using the filter unit of the present invention, it was possible to obtain a purified liquid from cell lysates containing viral vectors with high efficiency and high precision while suppressing pressure increase.

In Comparative Example 1, although the entire amount of cell lysate could be treated, the average pore diameter of the separation functional layer "a" section of the glass fiber filter used as filter A was small, which caused clogging and an increase in pressure. In addition, a decrease in the recovery rate of viral vector was observed due to adhesion to the clogged substances.

In Comparative Example 2, clogging occurred in filter B. This is presumed to be because the average pore diameter of the separation functional layer "a" section of the non-woven fabric A2 used as filter A was large, causing substances that passed through filter A without being removed to clog filter B.

In Comparative Example 3, clogging occurred in filter B because the average pore diameter of the separation functional layer "b" section of the PES membrane filter used as filters B and C was small.

In Comparative Example 4. it is presumed that filter C clogged due to substances that passed through filter B without being removed, because the average pore diameter of the separation functional layer "b" section of the non-woven fabric A1 used as filter B was large.

In Comparative Example 5, although the entire amount of cell lysate could be treated, it is presumed that since the number of sheets of non-woven fabric A1 used as filter A was small, i.e., the thickness of the separation functional layer "a" section was thin, substances that passed through filter A without being removed caused clogging in filter B. leading to a pressure increase.

In Comparative Example 6. it is presumed that since the number of sheets of non-woven fabric B1 used as filter B was small, i.e., the average thickness of the separation functional layer "b" section was thin, substances that passed through filter B without being removed caused clogging in filter C.

In Comparative Example 7, clogging occurred in filter C because the average pore diameter of the separation functional layer "c" section of the hollow fiber membrane C4 used as filter C was smaller than the viral vector.

In Example 6, by coating all of filters A, B, and C with the vinylpyrrolidone/vinyl propanoate random copolymer, in obtaining a purified liquid from cell lysates containing viral vectors, it was possible to further suppress the pressure increase and recover the viral vector with even higher efficiency compared to Example 1.

In Comparative Example 8, in the non-woven fabric B3 used as filter B, fibers with a thick diameter were present and the average porosity was low, which caused clogging in filter B.

In Comparative Example 9, although the entire amount of cell lysate could be treated, since the number of sheets of non-woven fabric A1 used as filter A was large, i.e., the thickness of the separation functional layer "a" section was thick, clogging occurred and a pressure increase was generated. In addition, a decrease in the recovery rate of viral vector was observed due to adhesion to the clogged substances.

In Comparative Example 10, since the number of sheets of non-woven fabric B1 used as filter B was large, i.e., the thickness of the separation functional layer "b" section was thick, clogging occurred and a pressure increase was generated. In addition, a decrease in the recovery rate of viral vector was observed due to adhesion to the clogged substances.

In Comparative Example 11, although the entire amount of cell lysate could be treated, since the average pore diameter of the separation functional layer "c" section of the non-woven fabric B1 used as filter C was large, the removal performance of filter C was insufficient, and the turbidity reduction of the purified liquid was insufficient.

[Description of Symbols]

100 Housing
101 Filter A (separation functional layer "a" section; non-woven fabric)
102 Filter B (separation functional layer "b" section; non-woven fabric)
103 Cylindrical housing
104 Filter C (separation functional layer "c" section; hollow fiber membrane)
105 Connecting portion
106 Cylindrical housing
107 U-shaped hollow fiber membrane
108 Pump
109 Pressure gauge
110 Cylindrical housing
111 Cylindrical inner core
200 Housing containing filter A
201 Housing containing filter B
202 Housing containing hollow fiber membranes
203 Housing containing filter A and filter B
204 Housing containing U-shaped hollow fiber membranes
205 Cylindrical housing containing filter A and filter B
300 Filter unit
301 Purification apparatus

## Claims

**1.** A filter unit, comprising:

a separation functional layer "a" section having an average pore diameter $D_a$, a separation functional layer "b" section having an average pore diameter $D_b$, and a separation functional layer "c" section having an average pore

diameter $D_c$; and
an inlet for introducing a liquid to be treated into said separation functional layer "a" section,
wherein said average pore diameters $D_a$, $D_b$, and $D_c$ satisfy the following conditions A and B, and
wherein said separation functional layers are arranged in the order of the "a" section, the "b" section, and the "c" section from said inlet.

$$\text{Condition A: } 30\ \mu m \geq D_a > D_b > D_c \geq 0.01\ \mu m$$

$$\text{Condition B: } 6 \geq D_a/D_b \geq 2.8$$

**2.** The filter unit according to claim 1, wherein

said separation functional layer "a" section has a thickness $T_a$,
said separation functional layer "b" section has a thickness $T_b$,
the upper limit of said thickness $T_a$ and said thickness $T_b$ is 5 mm or less, respectively, and
the following conditions C and D are satisfied.
Condition C: lower limit of thickness $T_a$ / average pore diameter $D_a \geq 30$
Condition D: lower limit of thickness $T_b$ / average pore diameter $D_b \geq 30$

**3.** The filter unit according to claim 1 or 2, wherein said separation functional layer "a" section and said separation layer "b" section are fibrous filters, and have an average porosity of 70% or more and 95% or less.

**4.** The filter unit according to any one of claims 1 to 3, wherein said separation functional layer "c" section supports a polymer having a unit selected from the group consisting of a monocarboxylic acid vinyl ester unit, vinylpyrrolidone unit, vinylcaprolactam unit, vinylacetamide unit, and acrylamide unit.

**5.** The filter unit according to any one of claims 1 to 4, wherein said separation functional layer "c" section is a hollow fiber membrane.

**6.** The filter unit according to any one of claims 1 to 5. wherein said separation functional layer "b" section is a non-woven fabric with an average fiber diameter of 0.3 to 1.5 $\mu$m.

**7.** The filter unit according to any one of claims 1 to 6, wherein the main component of said separation functional layer "a" section or said separation functional layer "b" section is a polyolefin.

**8.** The filter unit according to any one of claims 1 to 7, wherein said separation functional layer "a" section or said separation functional layer "b" section supports a polymer having a unit selected from the group consisting of a monocarboxylic acid vinyl ester unit, vinylpyrrolidone unit, vinylcaprolactam unit, vinylacetamide unit, and acrylamide unit.

**9.** The filter unit according to any one of claims 1 to 8, for use in the purification of a biological substance.

**10.** The filter unit according to any one of claims 1 to 10, further comprising:

a housing having an inlet and an outlet;
wherein said separation functional layer "a" section and said separation functional layer "b" section are joined and housed in said housing, and
the filling factor of said separation functional layer "a" section and said separation functional layer "b" section is 30% or more and 95% or less.

**11.** The filter unit according to claim 10. wherein

said housing is a cylindrical housing,
comprising a cylindrical inner core housed in said cylindrical housing, and
the following condition E is satisfied.

$$\text{Condition E: } 50 \geq SA/IA > 1$$

SA: surface area of the separation functional layer "a" section on the inlet side of the cylindrical housing
IA: internal surface area of the cylindrical inner core on the outlet side of the cylindrical housing

**12.** The filter unit according to claim 10 or 11, wherein

said housing is a cylindrical housing,
comprising a cylindrical inner core housed in said cylindrical housing,
said separation functional layer "a" section and said separation functional layer "b" section are housed in the form of pleats, and
said pleats have a height of ridge of 12 mm or more and 30 mm or less, and the number of ridges is 30 or more and 70 or less.

**13.** The filter unit according to any one of claims 10 to 12, wherein

said housing is a cylindrical housing,
comprising a cylindrical inner core housed in said cylindrical housing, and
the following condition F is satisfied.

$$\text{Condition F: } 4000 \geq ALV/ILV \geq 30$$

ALV: linear velocity at the separation functional layer "a" section on the inlet side of the cylindrical housing
ILV: linear velocity at the cylindrical inner core on the outlet side of the cylindrical housing

**14.** The filter unit according to any one of claims 5 to 13, wherein

said hollow fiber membrane contains a polysulfone-based polymer,
the inner diameter of said hollow fiber membrane is 150 μm or more and 1500 μm or less,
and the membrane thickness of said hollow fiber membrane is 20 μm or more and 300 μm or less.

**15.** A purification apparatus for purifying a biological substance, comprising: a pump;

the filter unit according to any one of claims 1 to 14; and
a pressure gauge,
wherein said pressure gauge is connected to a connecting portion between said pump and
the inlet of said filter unit and to a connecting portion of each housing in which each filter is housed.

**16.** The purification apparatus according to claim 15, for use in the purification of a biopharmaceutical.

**17.** The purification apparatus according to claim 15, for use in the purification of a food ingredient or a beverage ingredient.

**18.** A biological substance purified by the purification apparatus according to claim 15.

**19.** A method of producing a purified liquid containing a biological substance, comprising:

a step X of passing a liquid to be treated through a separation functional layer "a" section having an average pore diameter $D_a$ at a linear velocity in the range of 0.01 to 1.5 m/Hour to obtain a treated liquid X;
a step Y of passing said treated liquid X through a separation functional layer "b" section having an average pore diameter $D_b$ at a linear velocity in the range of 0.001 to 1.5 m/Hour to obtain a treated liquid Y; and
a step Z of passing said treated liquid Y through a separation functional layer "c" section having an average pore diameter $D_c$ at a linear velocity in the range of 0.00005 to 1.5 m/Hour to obtain a purified liquid,
wherein said average pore diameters $D_a$, $D_b$, and $D_c$ satisfy the following conditions A and B.

$$\text{Condition A: } 30\ \mu m \geq D_a > D_b > D_c \geq 0.01\ \mu m$$

$$\text{Condition B: } 6 \geq D_a/D_b \geq 2.8$$

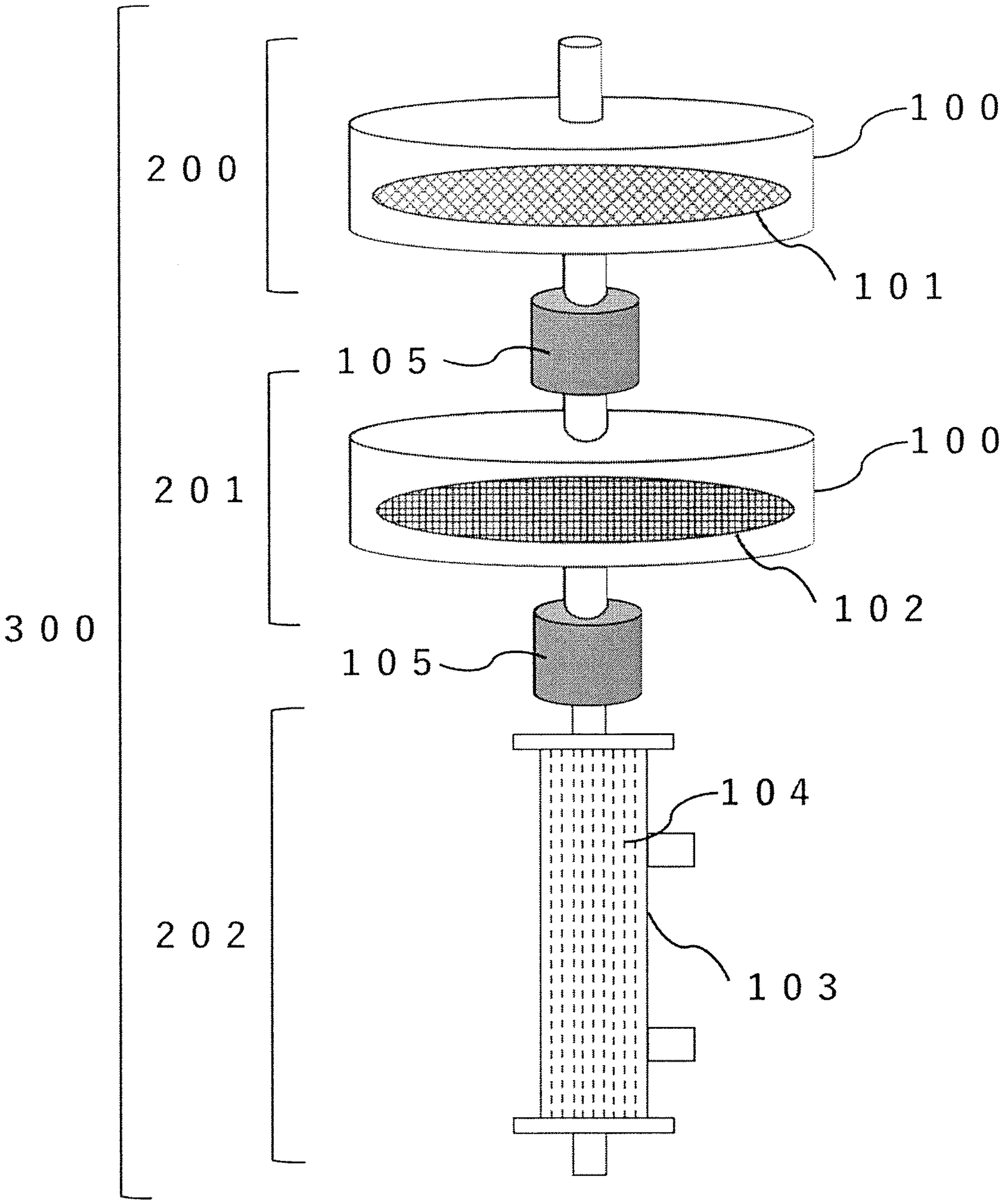


Fig.1

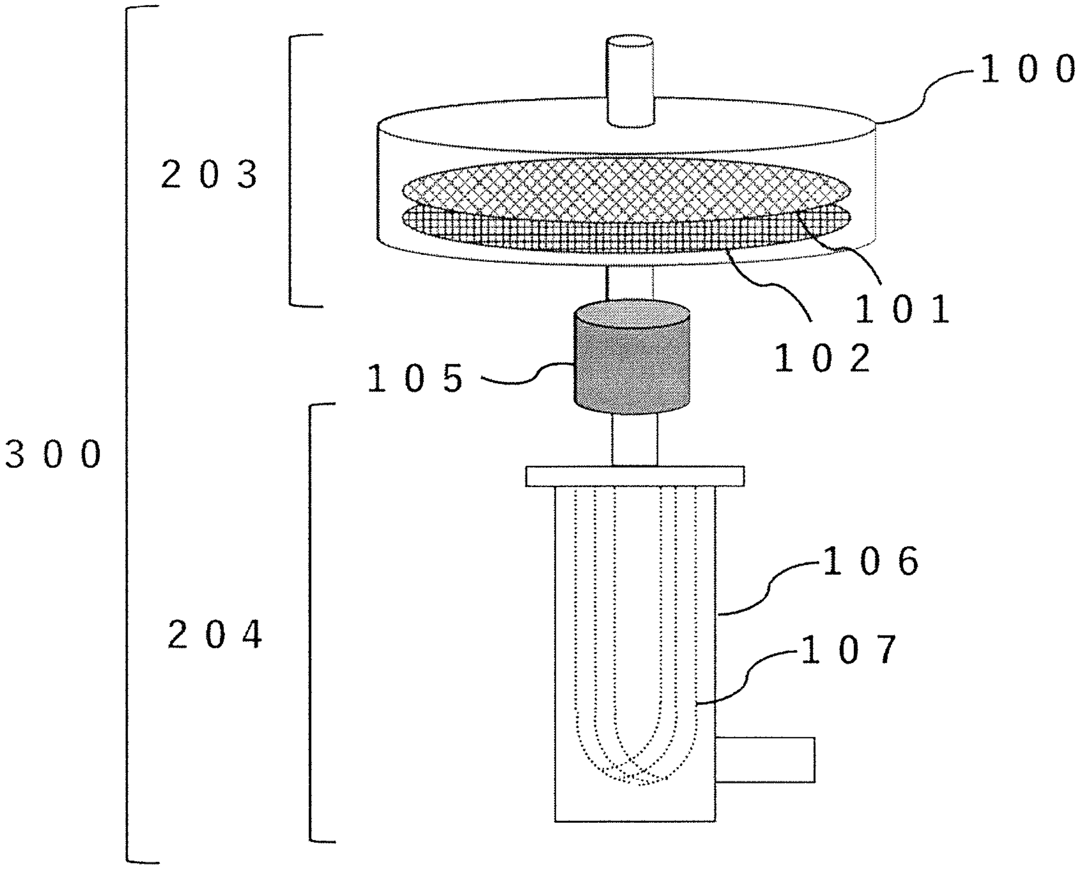


Fig.2

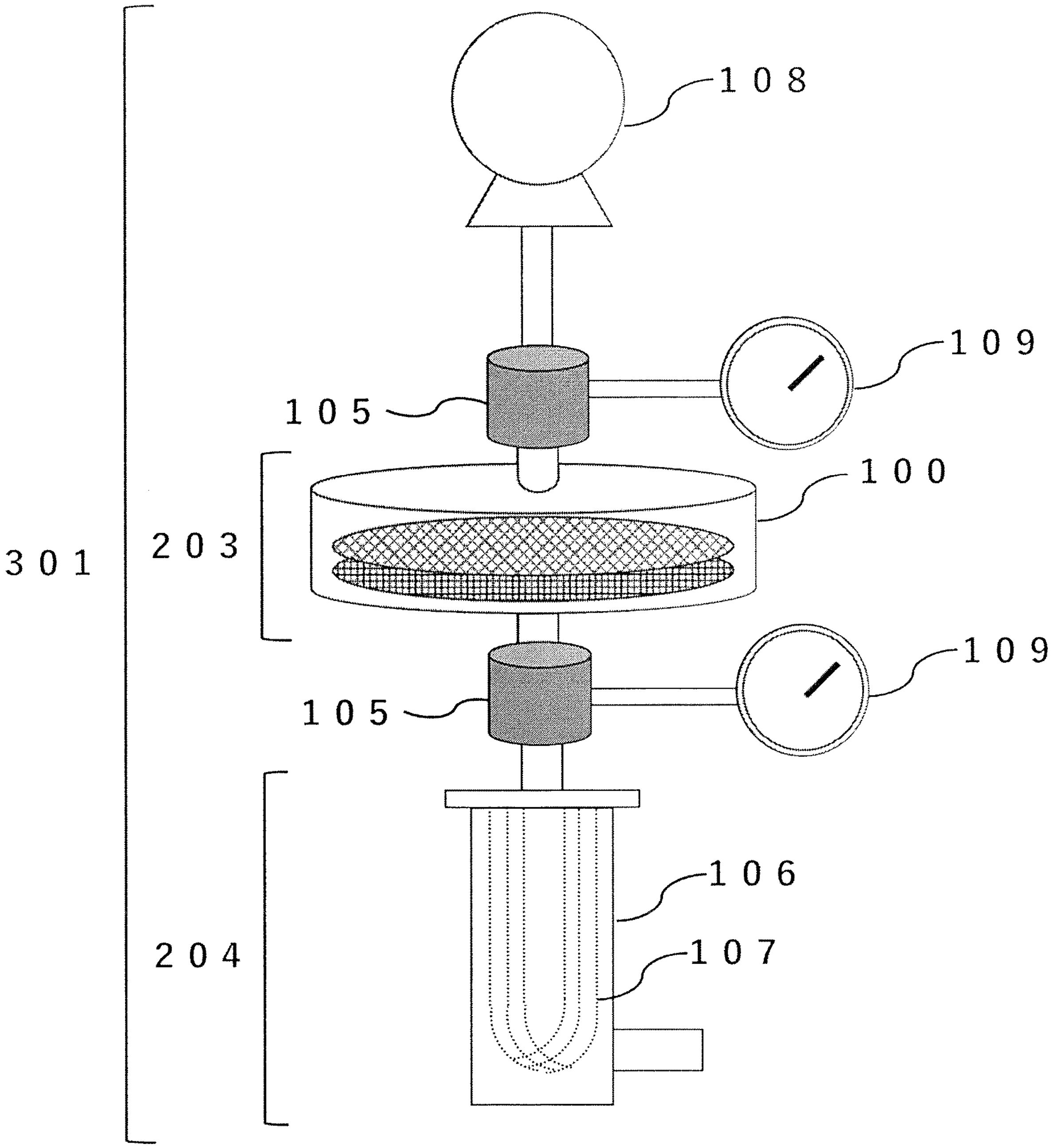


Fig.3

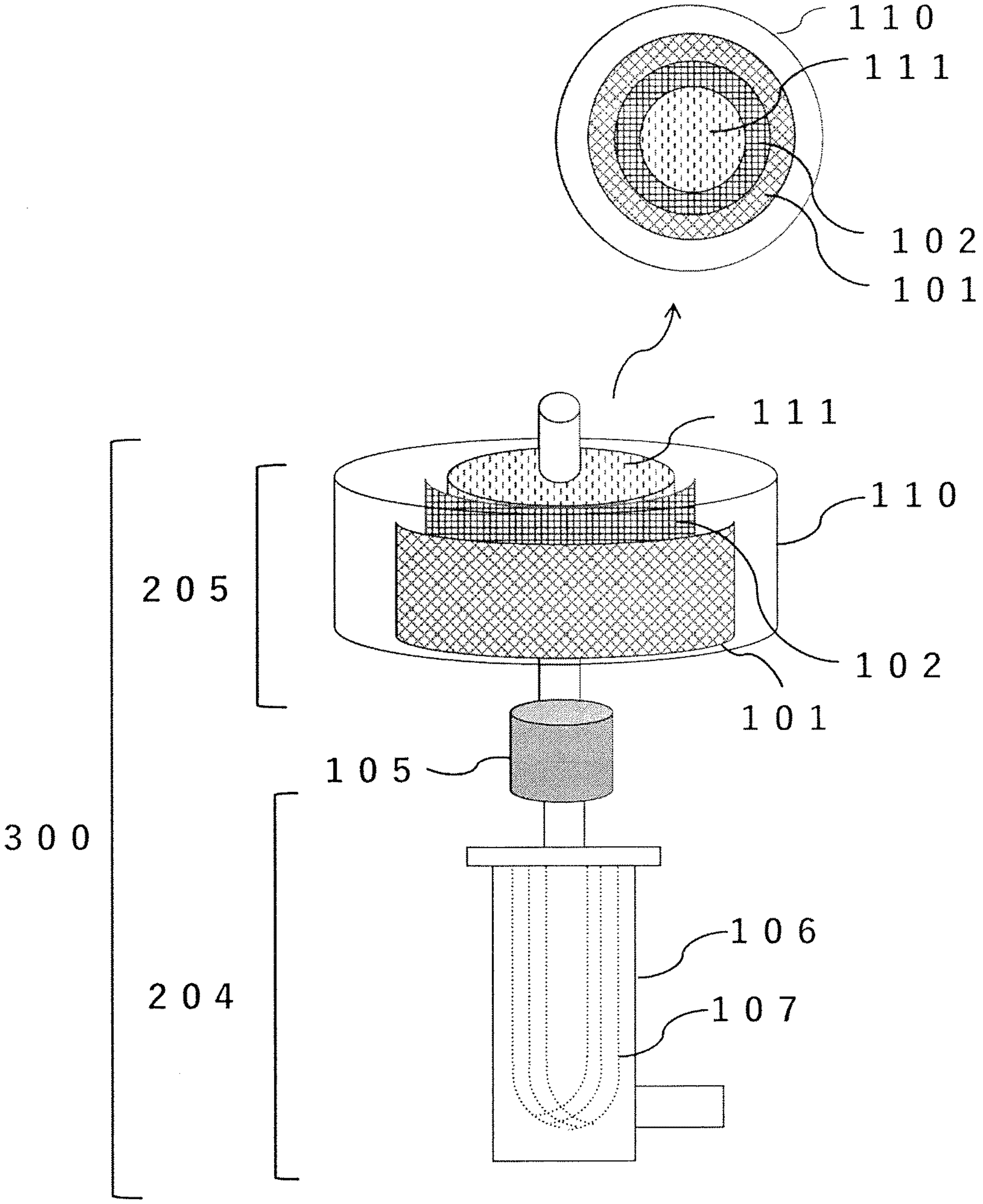


Fig.4

## INTERNATIONAL SEARCH REPORT

International application No.
**PCT/JP2024/010177**

### A. CLASSIFICATION OF SUBJECT MATTER

***B01D 61/14***(2006.01)i; ***B01D 29/50***(2006.01)i; ***B01D 39/16***(2006.01)i; ***B01D 61/16***(2006.01)i; ***B01D 63/02***(2006.01)i; ***B01D 69/00***(2006.01)i; ***B01D 69/08***(2006.01)i; ***B01D 69/12***(2006.01)i; ***B01D 71/44***(2006.01)i; ***B01D 71/68***(2006.01)i
FI: B01D61/14 500; B01D61/16; B01D63/02; B01D69/00; B01D69/08; B01D69/12; B01D71/68; B01D39/16 A; B01D39/16 E; B01D29/24 G; B01D71/44

According to International Patent Classification (IPC) or to both national classification and IPC

### B. FIELDS SEARCHED

Minimum documentation searched (classification system followed by classification symbols)

B01D61/14; B01D29/50; B01D39/16; B01D61/16; B01D63/02; B01D69/00; B01D69/08; B01D69/12; B01D71/44; B01D71/68

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 5-329206 A (TERUMO KABUSHIKI KAISHA) 14 December 1993 (1993-12-14) claim 1, paragraphs [0008], [0014]-[0024], [0036], [0038], [0048], [0051], fig. 1-2 | 1-3, 5-7, 9-11, 14, 19 |
| Y | | 4, 8 |
| A | | 12-13, 15-18 |
| Y | WO 2022/202603 A1 (TORAY INDUSTRIES, INC.) 29 September 2022 (2022-09-29) claim 7 | 4, 8 |
| A | | 12-13, 15-18 |
| Y | WO 2021/100804 A1 (TORAY INDUSTRIES, INC.) 27 May 2021 (2021-05-27) claim 4 | 4, 8 |
| A | | 12-13, 15-18 |
| A | JP 2019-166520 A (TORAY INDUSTRIES, INC.) 03 October 2019 (2019-10-03) | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/010177**

**C. DOCUMENTS CONSIDERED TO BE RELEVANT**

| Category* | Citation of document, with indication, where appropriate, of the relevant passages | Relevant to claim No. |
|---|---|---|
| A | US 2012/0292247 A1 (MOON, Kyung-Hee) 22 November 2012 (2012-11-22) | 1-19 |

Form PCT/ISA/210 (second sheet) (July 2022)

**INTERNATIONAL SEARCH REPORT**
**Information on patent family members**

International application No.
**PCT/JP2024/010177**

| Patent document cited in search report | Publication date (day/month/year) | Patent family member(s) | Publication date (day/month/year) |
|---|---|---|---|
| JP 5-329206 A | 14 December 1993 | (Family: none) | |
| WO 2022/202603 A1 | 29 September 2022 | EP 4316646 A1<br>claim 7<br>CN 117177812 A | |
| WO 2021/100804 A1 | 27 May 2021 | US 2023/0024252 A1<br>claim 4<br>EP 4063006 A1<br>CN 114845798 A | |
| JP 2019-166520 A | 03 October 2019 | (Family: none) | |
| US 2012/0292247 A1 | 22 November 2012 | EP 2527023 A2<br>KR 10-2011-0085096 A<br>CN 102711946 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017529070 A
- WO 2010060719 A